# EUROPEAN PATENT APPLICATION

(11) **EP 2 950 587 A1**
(43) Date of publication of application: **02.12.2015**
(21) Application number: 13873096.5
(22) Date of filing: 25.01.2013
(51) Int. Cl.: H04W 36/36

(54) **HANDOVER METHOD BASED ON UPLINK SIGNAL, METHOD FOR CONFIGURING UPLINK SIGNAL, USER EQUIPMENT, AND BASE STATION**

(71) Applicant: Fujitsu Limited, Kawasaki-shi, Kanagawa 211-8588 (JP)
(72) Inventor: WANG, Weiwei, Beijing 100025 (CN); CHANG, Ningjuan, Beijing 100025 (CN); WANG, Yi, Beijing 100025 (CN)
(74) Representative: Wilding, Frances Ward
(86) International application number: PCT/CN2013/070998
(87) International publication number: WO 2014/113976

(57) **Abstract**

The embodiments of the present disclosure provide a handover method based on an uplink signal, a method for configuring an uplink signal, UE and a base station. The handover method includes: transmitting, by a source base station, a triggering message to the UE, to trigger the UE to transmit an uplink signal for handover; receiving notification message(s) transmitted by one or more other base station(s) according to detection of the UL signal; and determining a target base station from the one or more other base station(s) according to the notification message(s), and performing handover of the UE. By the embodiments of the present disclosure, it is possible to accelerate judging of handover based on measurement of an UL signal, to satisfy handover demand in different scenarios.

## Description

### Technical Field

The disclosure relates to the communication field, and in particular to a handover method based on an uplink (UL) signal, a method for configuring an UL signal, user equipment (UE) and a base station.

### Background

At present, under the control of a base station side, UE can be handed over from a source base station to a target base station. In an existing mechanism, handover of the UE is performed based on a result of measurement of a downlink (DL) signal. The UE performs signal measurement based on information configured by the base station side, and then reports a result of the measurement to the base station side which initiates a handover procedure.

But the inventor finds out in the existing solutions, measurement of a DL signal needs to include the process of cell (or frequency) identification and the process of intra-frequency (or inter-frequency) measurement, which takes relatively long time. Therefore, in small cell scenarios or the like, when the UE with a high speed moves across the small cell, it may leave the coverage of the small cell before finishing the measurement, thereby causing link failure due to that a measurement report is not triggered timely.

It should be noted that the above introduction to the background of the disclosure is stated only for the convenience of clear and complete explanation to the technical solution of the present disclosure, and for the convenience of understanding of persons skilled in the art. It should not be regarded that the above technical solutions are publicly known to persons skilled in the art just because these solutions are explained in the Background part of the present disclosure.

### Summary

The embodiments of the present disclosure provide a handover method based on an UL signal, a method for configuring an UL signal, UE and a base station. An object of the present disclosure is to accelerate judging of handover based on measurement of an UL signal, to satisfy handover demand in different scenarios.

According to one aspect of the embodiments of the present disclosure, there is provided with a handover method based on an uplink signal, applicable to a communication system where UE is handed over from a source base station to a target base station, wherein the method includes:
transmitting, by the source base station to the UE, a triggering message, to trigger the UE to transmit an uplink signal for handover;
receiving notification message(s) transmitted by one or more other base station(s), wherein the notification message is transmitted according to detection of the uplink signal; and
determining, by the source base station, the target base station from the one or more other base station(s) according to the notification message(s), and performing handover of the UE.

According to another aspect of the embodiments of the present disclosure, there is provided with a handover method based on an uplink signal, applicable to a communication system where UE is handed over from a source base station to a target base station, wherein the method includes:
detecting, by the target base station, an uplink signal for handover transmitted by the UE; and
transmitting a notification message to the source base station according to a result of the detection, so that the source base station performs handover of the UE according to the notification message.

According to another aspect of the embodiments of the present disclosure, there is provided with a handover method based on an uplink signal, applicable to a communication system where UE is handed over from a source base station to a target base station, wherein the method includes:
receiving, by the UE, a triggering message transmitted by the source base station; and
transmitting an uplink signal for handover according to the triggering message, so that one or more other base station(s) transmit notification message(s) to the source base station according to the detection of the uplink signal, and the source base station performs handover of the UE according to the notification message(s).

According to another aspect of the embodiments of the present disclosure, there is provided with a base station, applicable to a communication system where UE is handed over from the base station to a target base station, wherein the base station includes:
a message transmitting unit, configured to transmit a triggering message to the UE, to trigger the UE to transmit an uplink signal for handover;
a notification receiving unit, configured to receive notification message(s) transmitted by one or more other base station(s), wherein the notification message is transmitted according to detection of the uplink signal; and
a handover unit, configured to determine the target base station from the one or more other base station(s) according to the notification message(s), and perform handover of the UE.

According to another aspect of the embodiments of the present disclosure, there is provided with a base station, applicable to a communication system where UE is handed over from a source base station to the base station, wherein the base station includes:
a detecting unit, configured to detect an uplink signal for handover transmitted by the UE; and
a notification transmitting unit, configured to transmit a notification message to the source base station according to a result of the detection, so that the source base station performs handover of the UE according to the notification message.

According to another aspect of the embodiments of the present disclosure, there is provided with UE, applicable to a communication system where the UE is handed over from a source base station to a target base station, wherein the UE includes:
a message receiving unit, configured to receive a triggering message transmitted by the source base station; and
a signal transmitting unit, configured to transmit an UL signal for handover according to the triggering message, so that one or more other base station(s) transmit notification message(s) to the source base station according to the detection of the UL signal, and the source base station performs handover of the UE according to the notification message(s).

According to another aspect of the embodiments of the present disclosure, there is provided with a method for configuring an UL signal, wherein the method includes:
negotiating, by a first base station and a second base station, configuration information of an uplink signal of UE; and
transmitting, by the first base station to the UE, configuration information of the uplink signal, so that the UE transmits the uplink signal according to the configuration information and the second base station detects the uplink signal according to the configuration information.

According to another aspect of the embodiments of the present disclosure, there is provided with a method for configuring an UL signal, wherein the method includes:
negotiating, by a second base station and a first base station, configuration information of an uplink signal of UE; and
detecting, by the second base station according to the configuration information, the uplink signal transmitted by the UE.

According to another aspect of the embodiments of the present disclosure, there is provided with a method for configuring an UL signal, wherein the method includes:
receiving, by UE, configuration information of an uplink signal transmitted by a first base station; and
transmitting the uplink signal according to the configuration information, so that one or more second base station(s) detect the uplink signal.

According to another aspect of the embodiments of the present disclosure, there is provided with a base station, the base station including:
a negotiating unit, configured to negotiate configuration information of an uplink signal of UE with one or more second base station(s); and
an information transmitting unit, configured to transmit the configuration information of the uplink signal to the UE.

According to another aspect of the embodiments of the present disclosure, there is provided with a base station, the base station including:
a negotiating unit, configured to negotiate configuration information of an uplink signal of UE with a first base station; and
a detecting unit, configured to detect the uplink signal transmitted by the UE according to the configuration information.

According to another aspect of the embodiments of the present disclosure, there is provided with UE, the UE including:
an information receiving unit, configured to receive configuration information of an uplink signal transmitted by a first base station; and
a signal transmitting unit, configured to transmit the uplink signal according to the configuration information, so that one or more second base station(s) detect the uplink signal.

According to another aspect of the embodiments of the present disclosure, there is provided with a communication system which includes the UE as described above and the base station as described above.

According to another aspect of the embodiments of the present disclosure, there is provided with a computer-readable program, wherein when the program is executed in a base station, the program enables a computer to carry out the handover method based on an UL signal, or the method for configuring an UL signal as described above, in the base station.

According to another aspect of the embodiments of the present disclosure, there is provided with storage medium in which a computer-readable program is stored, wherein the computer-readable program enables a computer to carry out the handover method based on the UL signal, or the method for configuring the UL signal as described above, in a base station.

According to another aspect of the embodiments of the present disclosure, there is provided with a computer-readable program, wherein when the program is executed in UE, the program enables a computer to carry out the handover method based on the UL signal, or the method for configuring the UL signal as described above, in the UE.

According to another aspect of the embodiments of the present disclosure, there is provided with a storage medium in which a computer-readable program is stored, wherein the computer-readable program enables a computer to carry out the handover method based on the UL signal, or the method for configuring the UL signal as describe above, in the UE.

The embodiments of the disclosure have beneficial effects that UE is triggered by a triggering message transmitted from a source base station to transmit an UL signal for handover and receive notification messages transmitted by one or more other base stations based on the UL signal, and a target base station is determined and the UE is handed over based on the notification messages; and it is practicable to accelerate judging of handover based on measurement of an UL signal, to satisfy handover demand in different scenarios.

With reference to the aftermentioned description and drawings, a specific embodiment of the disclosure is disclosed in detail, which specifies principles of the disclosure and modes in which the disclosure can be adopted. It should be understood that the embodiment of the disclosure is not limited in the scope. The embodiment of the disclosure can include many variations, modifications and equivalents within the scope of the appended claims and provisions.

Features described and/or shown for one embodiment can be used in other one or more embodiments in the same or a similar manner, can be combined with features in other embodiments, or replace features in other embodiments.

It should be emphasized that the term "comprise/include" means existence of a feature, an assembly, a step or components when used herein, but is not exclusive of existence or addition of one or more other features, assembly, steps or components.

### Brief Description of the Drawings

Many aspects of the disclosure can be better understood with reference to the following drawings. Parts in the drawings are not drawn proportionally, but just for showing the principles of the disclosure. For the convenience of showing and describing some portions of the disclosure, corresponding portions in the drawings may be enlarged or reduced.

Elements and features described in one drawing or one embodiment of the disclosure can be combined with elements and features shown in one or more other drawings or embodiments. In addition, in the drawings, like reference numbers denote corresponding parts in several drawings and can be used for indicating corresponding parts used in more than one embodiment.
Fig. 1 is a flowchart of the handover method based on an UL signal according to the first embodiment of the present disclosure;
Fig. 2 is an exemplary diagram of a handover scenario according to the first embodiment of the present disclosure;
Fig. 3 is another flowchart of the handover method based on an UL signal according to the first embodiment of the present disclosure;
Fig. 4 is another flowchart of the handover method based on an UL signal according to the first embodiment of the present disclosure;
Fig. 5 is another flowchart of the handover method based on an UL signal according to the first embodiment of the present disclosure;
Fig. 6 is an interaction diagram of configuration information between base stations according to the first embodiment of the present disclosure;
Fig. 7 is a flowchart of transmitting configuration information between base stations according to the first embodiment of the present disclosure;
Fig. 8 is a flowchart of the handover method based on an UL signal according to the second embodiment of the present disclosure;
Fig. 9 is another flowchart of the handover method based on an UL signal according to the second embodiment of the present disclosure;
Fig. 10 is a flowchart of the handover method based on an UL signal according to the third embodiment of the present disclosure;
Fig. 11 is another flowchart of the handover method based on an UL signal according to the third embodiment of the present disclosure;
Fig. 12 is a structural schematic of a base station according to the fourth embodiment of the present disclosure;
Fig. 13 is another structural schematic of a base station according to the fourth embodiment of the present disclosure;
Fig. 14 is a structural schematic of a base station according to the fifth embodiment of the present disclosure;
Fig. 15 is another structural schematic of a base station according to the fifth embodiment of the present disclosure;
Fig. 16 is a structural schematic of UE according to the sixth embodiment of the present disclosure;
Fig. 17 is another structural schematic of UE according to the sixth embodiment of the present disclosure;
Fig. 18 is a flowchart of a method for configuring an UL signal according to the seventh embodiment of the present disclosure;
Fig. 19 is a flowchart of a method for configuring an UL signal according to the eighth embodiment of the present disclosure;
Fig. 20 is a flowchart of a method for configuring an UL signal according to the ninth embodiment of the present disclosure;
Fig. 21 is a structural schematic of a base station according to the tenth embodiment of the present disclosure;
Fig. 22 is a structural schematic of a base station according to the eleventh embodiment of the present disclosure;
Fig. 23 is a structural schematic of UE according to the twelfth embodiment of the present disclosure; and
Fig. 24 is a structural schematic of a communication system according to the thirteenth embodiment of the present disclosure.

### Detailed Description of the Embodiments

The aforementioned and other features of the disclosure will become apparent from the following description with reference to the accompanying drawings. In the description and its accompanying drawings, specific embodiments of the disclosure are disclosed, which specifies part of the embodiments in which principles of the disclosure can be adopted. It should be understood that, the present disclosure is not limited to the described embodiments, but on the contrary, the present disclosure includes all modifications, variations and equivalents that fall within the scope of the appended claims.

### The first embodiment

The embodiment of the present disclosure provides a handover method based on an UL signal, applicable to a communication system where UE is handed over from a source base station to a target base station. The handover method at a source base station side is described in detail as below.

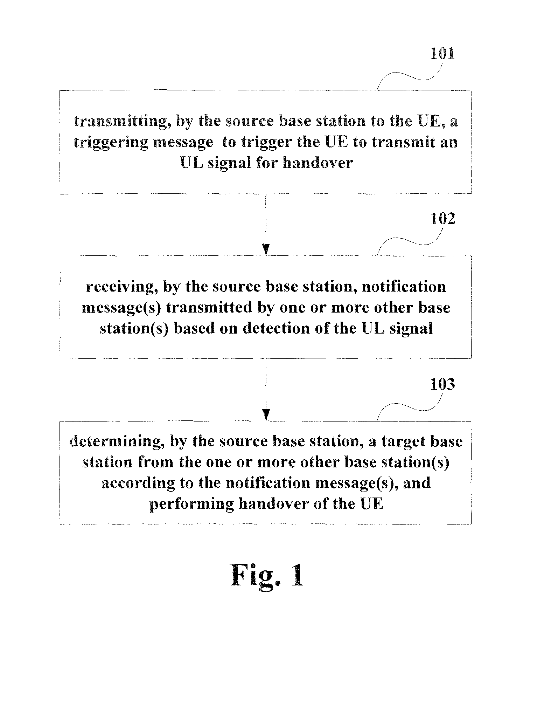

Fig. 1 is a flowchart of the handover method based on an UL signal according to the embodiment of the present disclosure. As shown in Fig. 1, the method includes:
step 101, transmitting, by the source base station to the UE, a triggering message to trigger the UE to transmit an UL signal for handover;
step 102, receiving, by the source base station, notification message(s) transmitted by one or more other base station(s) based on detection of the UL signal;
step 103, determining, by the source base station, a target base station from the one or more other base station(s) according to the notification message(s), and performing handover of the UE.

In this embodiment, the base station can transmit a triggering message to the UE. Upon reception of the triggering message, the UE can transmit an UL signal according to predefined configuration information, or already obtained configuration information, or configuration information included in the triggering message, or the like. Regarding how the UE specifically obtains configuration information, a specific embodiment can be determined according to actual situation, but the present disclosure is not limited to this embodiment.

Wherein, the configuration information can include frequency, resources or the like at which the UL signal is transmitted. But the present disclosure is not limited to this, and specific contents can be determined according to the actual UL signal. Specific contents of the configuration information will be described in detail as below.

In this embodiment, one or more other base station(s) can detect the UL signal transmitted by the UE, and can transmit notification message(s) to the source base station according to a result of the detection. The source base station can determine the target base station from the one or more other base station(s) according to the received one or more notification message(s) (or further by referring to conditions of other base station(s), such as the condition of load), and the UE may be handed over.

Accordingly, the handover can be judged based on the UL signal, as compared with an existing method of judging handover based on a DL signal, the embodiment of the present disclosure can accelerate judging of handover of the UE to satisfy handover demand in different scenarios.

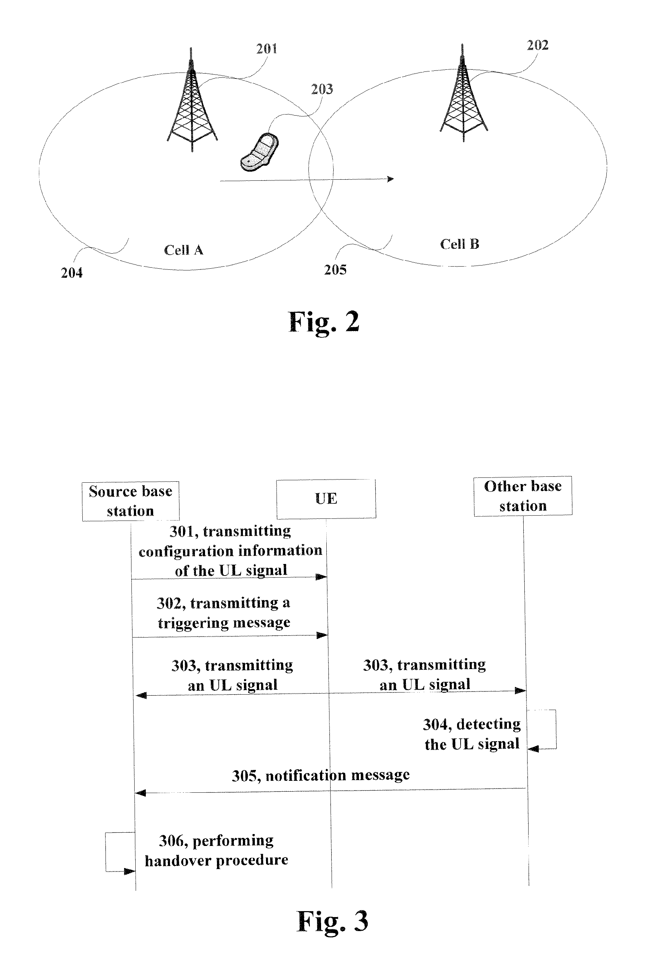

Fig. 2 is an exemplary diagram of a handover scenario according to the embodiment of the present disclosure. As shown in Fig. 2, UE 203 may trigger handover from a source base station 201 to a target base station 202 when moving from left to right. It is worth noting that, Fig. 2 only schematically shows one scenario of the embodiment, but the present disclosure is not limited thereto, for example, a cell 205 may also be a small cell included in a cell 204, and a specific scenario can be determined according to actual situation.

In a specific implementation, the source base station can negotiate with other base station(s), so that the base station side learns about the configuration information of the UL signal of the UE. The source base station can also transmit to other base station(s) a message which contains configuration information of UL signal of one or more pieces of UE, so that the base station side learns about the configuration information of the UL signal of the UE.

Furthermore, the source base station can transmit the configuration information of the UL signal to the UE, or the source base station can include the configuration information of the UL signal in the triggering message, so that the UE side learns about the configuration information of the UL signal.

Wherein, the configuration information of the UL signal can include any one of the following information or combination thereof:
(A) transmission power of the UL signal;
(B) carrier frequency information or cell information for transmitting the UL signal;
(C) target carrier frequency information or cell information for handover of the UE

In a specific implementation, when a target carrier frequency or a carrier frequency where a target cell is located is the same as a carrier frequency of a source cell where the UE is located, the information can be absent.
(D) identification information of the UE;
(E) information on the user type to which the UE is applicable;
   for example, information identifying that the UE is high-speed UE, or intermediate-speed UE, or the like, in this way, only the high-speed UE or the intermediate-speed UE needs to transmit the UL signal according to the configuration information of the UL signal, and other types of UE do not need to transmit the UL signal.
(F) information on the resource for transmitting the UL signal;
   for example, the resource information includes one of a time domain resource, a frequency domain resource, a space domain resource or the like, or combination thereof.
(G) information on number of times or time of the UL signal;
   for example, one of information on number of times that the UL signal should be transmitted, a maximum number of times of transmitting, or a minimum number of times of transmitting, or combinations thereof; or one of information on time period that permits the transmission of the UL signal, a shortest time length, or a longest time length, or combinations thereof.
(H) characteristic information of the UL signal.

For example, the characteristic information of the UL signal includes sequence information for generating the UL signal. In a specific implementation, the UL signal can be a preamble sequence signal for random access, and the characteristic information of the uplink signal may at least include: at least one piece of information in information entities PRACH-Config, RACH-ConfigCommon or RACH-ConfigDedicated. For specific details, it is advised to refer to TS36.331 v11.2.0.

Or, the UL signal can be a sounding reference signal (SRS); and the characteristic information of the UL signal may at least include: at least one piece of information in an information entity SoundingRS-UL-Config. For specific details, it is advised to refer to TS36.331 v11.2.0.

Or, the UL signal can be a demodulation reference signal (DM-RS); and the characteristic information of the UL signal may at least include: at least one piece of information in an information entity DM-RS-Config. For specific details, it is advised to refer to TS36.331 v11.2.0. In this embodiment, the configuration information of the UL signal may be UE-specific (for example, configuration information of the UL signal for different UE are different), thus the base station side needs to configure different information for different UE.

Or the configuration information of the UL signal may be cell-specific (for example, configuration information of the UL signal for different cells are different, but are the same for all UE in the same cell), thus the base station side needs to configure different information for UE of different cells, and UE of the same cell can be configured with the same information.

Or the configuration information of the UL signal may be base-station-specific (for example, configuration information of the UL signal for different base stations are different, but configuration information of the UL signal for all UE of all cells under the same base station are the same). Thus the base station side needs to configure different information for the UE under different base stations, and can configure the same information for the UE under the same base station.

Furthermore, in the overall configuration information of the UL signal, it is practicable that a part is UE-specific, a part is cell-specific, and a part is base-station-specific.

It is worth noting that, the above only schematically describes configuration information of the UL signal. However, the present disclosure is not limited to the above, and specific embodiments of configuration information can be determined based on actual situation.

In one implementation, the triggering message may include configuration information of the UL signal, and the UE can obtain the configuration information of the UL signal. In another embodiment, the source base station may transmit the configuration information of the UL signal to the UE.

Fig. 3 is another flowchart of the handover method based on an UL signal according to the embodiment of the present disclosure. As shown in Fig. 3, the method includes:
step 301, transmitting, by the source base station to the UE, configuration information of the UL signal;
step 302, transmitting, by the source base station, a triggering message to the UE;
step 303, transmitting, by the UE, an UL signal for handover, according to the triggering message;
step 304, detecting, by other base station(s), the UL signal;
step 305, receiving, by the source base station, notification message(s) transmitted by one or more other base station(s) based on detection of the UL signal;
step 306, determining, by the source base station, a target base station from the one or more other base station(s) according to the notification message(s), and performing handover of the UE.

It is worth noting that, the step 301 and the step 302 are not carried out necessarily in a certain order, and the configuration information can be transmitted prior to the triggering message, or can be transmitted subsequent to the triggering message, or can be transmitted at the same time. Specific embodiments can be determined based on actual situation.

In this implementation, configuration information of the UL signal between base stations can be predefined, or can be pre-obtained or the like, and specific embodiments can be determined based on actual situation.

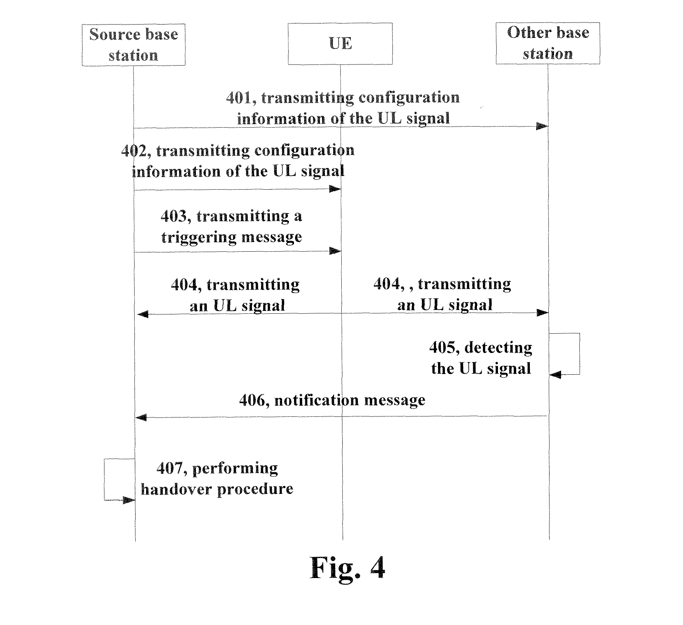

In another implementation, the base stations can transmit messages between each other to obtain the configuration information of the UL signal of the UE. Fig. 4 is another flowchart of the handover method based on an UL signal according to the embodiment of the present disclosure. As shown in Fig. 4, the method includes:
step 401, transmitting, by the source base station to other base station(s), configuration information of the UL signal of the UE;
step 402, transmitting, by the source base station to the UE, configuration information of the UL signal;
step 403, transmitting, by the source base station, a triggering message to the UE;
step 404, transmitting, by the UE, an UL signal for handover, according to the triggering message;
step 405, detecting, by other base station(s), the UL signal;
step 406, receiving, by the source base station, notification message(s) transmitted by one or more other base station(s) based on detection of the UL signal;
step 407, determining, by the source base station, a target base station from the one or more other base station(s) according to the notification message(s), and performing handover of the UE.

It is worth noting that, the step 401, the step 402 and the step 403 are not carried out necessarily in a certain order, and specific embodiments can be determined based on actual situation. In this embodiment, the base stations can direct transmit the configuration information of the UL signal by one or more messages between each other.

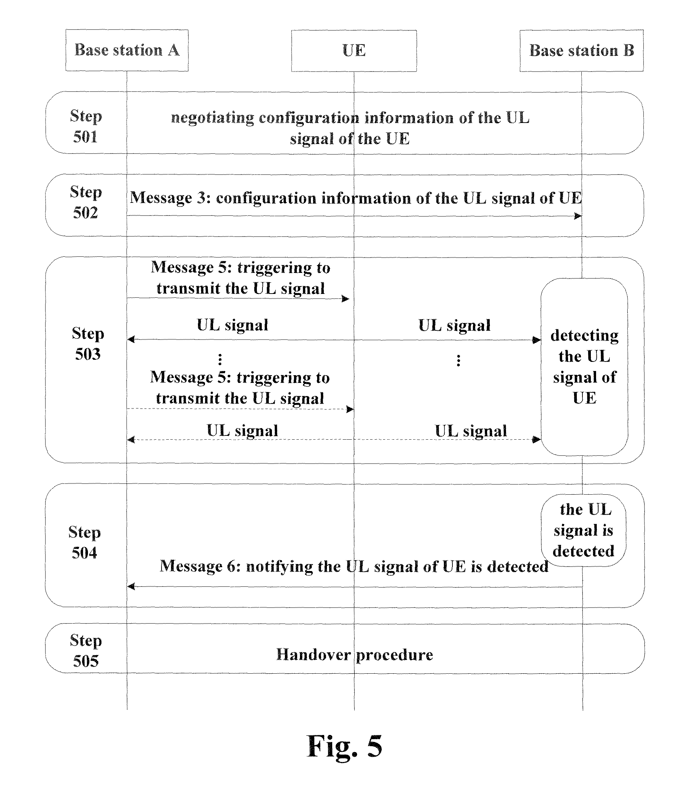

In another implementation, the base stations can negotiate or transmit messages between each other to obtain the configuration information of the UL signal of the UE. Fig. 5 is another flowchart of the handover method based on an UL signal according to the embodiment of the present disclosure. As shown in Fig. 5, the method includes:
step 501, negotiating configuration information of the UL signal of the UE, by a source base station (a base station A) with at least one other base station (base station B);
step 502, transmitting, by the source base station, configuration information of the UL signal of at least one piece of UE, to the other base station(s);
step 503, triggering, by the source base station according to the configuration information, the UE to transmit the UL signal for at least one time; and detecting, by the other base station(s) according to the configuration information, the UL signal;
step 504, transmitting, by the other base station(s) according to condition of the detection, a notification message to the source base station;
step 505, triggering, by the source base station according to the notification message, the handover procedure of the UE.

It is worth noting that, Figs. 3 to 5 only schematically show specific embodiments of the present disclosure, but the present disclosure is not limited thereto. The present disclosure is further described in detail by only taking the procedure shown in Fig. 5 as an example.

The step 501 of negotiating configuration information of the UL signal of the UE, by a source base station with the other base station can specifically include: transmitting from the source base station to the other base station(s) a first message which contains configuration information of the UL signal of one or more pieces of UE of the source base station; receiving, by the source base station, a second message responded by the other base station, the second message being an acknowledgement message or a message containing the configuration information of the UL signal of one or more pieces of UE of the other base station(s).

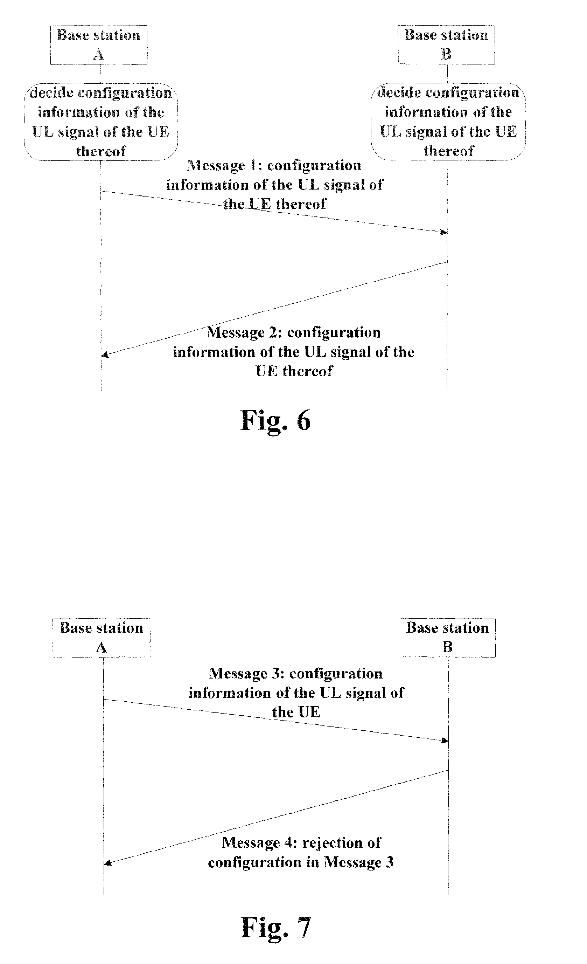

Fig. 6 is an interactive flowchart of configuration information of the UL signal between base stations. As shown in Fig. 6, configuration information of the UL signals can interact between the base station A and the base station B. Each base station can decide configuration information of the UL signal of the UE thereof. Hereinafter, the base station A transmits a message 1 (the first message) containing the configuration information of the UL signal of the UE thereof to the base station B. Alternatively, the base station B responds the acknowledgement message or a message 2 (the second message) containing the configuration information of the UL signal of the UE of the base station B. It is worth noting that, if the configuration information of some UL signals is predefined or is known by each base station, then interaction is not required in this step.

Furthermore, the base station A can transmit different portions of the configuration information of the UL signal of the UE thereof to the base station B by different messages (such as a message 1, a message 1', a message 1" or the like). Similarly, the base station B can respond different portions of the configuration information of the UL signal of the UE thereof to the base station A by different messages (such as a message 2, a message 2', a message 2" or the like).

In a specific implementation, the message 1 (the first message) may be an X2 setup request message, or an eNB configuration update message; while the message 2 (the second message) may be an X2 setup response message, or an eNB configuration update message. For specific contents of the messages, it is advised to refer to 3GPP TS36.423 v11.3.0. However, the present disclosure is not limited to this, and the first message can also be other existing messages or newly defined messages, and the second message can also be other existing messages or newly defined messages.

In this embodiment, each base station can interact for the configuration information of the UL signal with multiple base stations, and finally determine the configuration information of the UL signal of the UE thereof based on information of the interactions. Therefore, the configuration information of the UL signal used when the base station interacts with other base stations may be different from the configuration information of the UL signal of the UE thereof finally determined by the base station (for example, the base station can correspondingly perform adjustment based on load condition or the like), and the finally determined information is the configuration information used when the UE transmits the UL signal.

In the step 502, the source base station may transmit a third message to the other base station, the third message containing configuration information of uplink signal of one or more pieces of UE of the source base station. In a specific implementation, the source base station may transmit the third message to the other base station(s) when signal strength and/or signal quality of the UE is smaller than a preset threshold value, or when an OAM (Operation Administration and Maintenance) system is triggered, or when a preset condition is triggered.

The step 502 may further include: receiving by the source base station a fourth message transmitted by the other base station, the fourth message being used to reject configuration information of UL signal of part or all of the UE in the third message. Wherein, the fourth message includes a cause for rejection and/or recommended configuration information of the UL signal of the UE.

Fig. 7 is a flowchart of transmitting configuration information of UL signal between base stations. As shown in Fig. 7, the base station A transmits configuration information of the UL signal to the base station B. The message 3 (the third message) contains configuration information of the UL signal of at least one UE. After the message 3 is transmitted by the base station A, the base station B can reject it.

In this embodiment, the cause for rejection can include: the base station B cannot detect the UL signal of the UE according to the configuration information in the message 3, or relatively severe interference to the UL signal, or configuration of the UL signal of the UE conflicts with configuration of the UL signal of the other UE of cell, or the like.

The base station B can reject configuration information of the UL signals of all or part of UE contained in the message 3 by responding to the message 4 (the fourth message). The message 4 can include a cause for rejection (such as, inappropriate configuration of the UL signal, or nonsupport of a handover mechanism based on UL signal, or the like), and/or recommended configuration information of the UL signal of corresponding UE.

In a specific implementation, the message 3 (the third message) may be a handover request message, while the message 4 (the fourth message) may be a handover preparation failure message. For specific contents of the messages, it is advised to refer to 3GPP TS36.423 v11.3.0. However, the present disclosure is not limited to this, and the third message can also be other existing messages or newly defined messages, and the fourth message can also be other existing messages or newly defined messages.

It is worth noting that, Fig. 5 shows both of the step 501 and the step 502, but the present disclosure is not limited thereto. For example, it is practicable to carry out only the step 501, or only the step 502 (see the situation in Fig. 4), or neither of the step 501 or 502 (see the situation in Fig. 3).

In the step 503, at the source base station (the base station A) side, after configuration of the UL signal of one UE is determined (for example, the step 503 is carried out straightly subsequent to the step 501, or is carried out subsequent to the step 502 without carrying out the step 501, or is carried out following the steps 501 and 502, or is carried out after the OAM is triggered, or is carried out without any triggering condition, or the like), the source base station can trigger the UE to transmit the UL signal in the following manner.

Before triggering the UE to transmit the UL signal, the base station A can transmit the configuration information of the UL signal of the UE to the UE by at least one message. For example, all the configuration information of UL signal of the UE is transmitted to the UE by one message, or is divided into multiple parts (each part may have overlapped contents, or may be totally different parts) and the different parts are transmitted to the UE by different messages. Note that, the configuration information can be transmitted after the step 501, or only after the step 502 without carrying out the step 501, or after the steps 501 and 502, or after the OAM is triggered, or at any time.

After the UE has received all the configurations of the UL signal, the base station A can transmit a message 5 (it can be referred to as a triggering message of the UL signal) to trigger the UE to transmit the UL signal. In addition, all or parts of the above-described configuration information of the UL signal can also be transmitted to the UE by the message 5.

Upon reception of the message 5, the UE can transmit the UL signal in the following two manners:
(1) one message 5 can trigger transmission of the UL signal for only one time (as shown in Fig. 5, the second message 5 represented by the dotted line triggers another transmission of the UL signal);
(2) one message 5 can trigger transmission of the UL signals for multiple times.

In each of of the above-described manners, resources used for transmitting the UL signal can be configured by a configuration message of the UL signal, or can be configured by a triggering message of the UL signal.

In the step 503, at the other base station(s) (the base station B) side: if the base station B can accept the configuration information of the UL signal contained in the message 3, then at least one of the following operations can be performed:
(a) if a frequency where the UE under the base station A transmits the UL signal or a cell corresponding to the frequency is not activated (such as in a sleep state), the base station B can activate the frequency or the cell, or can at least activate a receiver corresponding to the frequency or the cell;
(b) starting a timer to determine the time for responding to the message 3 (the timer can be started when the message 3 in the step 502 is received, or can be started upon receipt of a first UL signal of the UE, but the present disclosure is not limited to this);
(c) detecting the UL signal of the UE before responding to the message 3.

It is worth noting that, the above-described three operations can be performed in any order or can be performed simultaneously, which can be determined according to actual situation.

In the step 504, if the base station B has detected the UL signal of the UE before expiration of the set timer, then the base station B can transmit a message 6 (a notification message) to the base station A, so as to notify the base station A that the base station B has detected the UL signal of the UE.

The base station B can judge the UE according to preset condition. Condition under which the UL signal of the UE is detected can be: the UL signal of the UE is correctly received for a certain number of times, and/or the number of the correctly received UL signals of the UE with the signal strength or signal quality exceeding a certain threshold value exceeds a certain threshold value.

In this embodiment, the message 6 (the notification message) can at least include one of the following information:
(a) a UE identifier of the UL signal detected by the base station B;
(b) number of the detected UL signals;
(c) signal strength or signal quality of the detected UL signal, and/or average signal strength or average signal quality of the detected UL signal.

Here, signal strength or signal quality of the UL signal of the UE can be an absolute value, or can be a relative value (for example, relative to a certain threshold value, i.e., the signal strength or signal quality of the UL signal of the UE is subtracted by the threshold value; and the threshold value can be set by the base station B, or can be set by the OAM).
(d) a threshold value of the signal strength or signal quality used in judging that the UL signal can be detected.

In a specific implementation, the message 6 can be a handover request acknowledge message. For specific contents of the messages, it is advised to refer to 3GPP TS36.423 v11.3.0. However, the present disclosure is not limited to this, and the message 6 can also be other existing messages or newly defined messages.

It is worth noting that, if the condition for judging that the UL signal of the UE can be detected is not satisfied even after the expiration of the timer set in the step 503, the base station B is likely to stop detection of the UL signal of the UE or respond a message to the base station A to indicate that the UL signal of the UE has not been detected.

In the step 505, the base station A may receive the message 6 transmitted by the base station B. In addition, the base station A may also receive message 6 from the other base station(s).

The base station A can select an appropriate handover object for the UE according to the received message 6 from at least one base station, and then start handover procedure of those UE of which the UL signals are detected by the base station B or the other base station(s).

It is worth noting that, in a specific implementation, if the message 5 and the message 6 are a handover request message and a handover request acknowledge message respectively, in the step 5, the base station A will transmit a handover command to the corresponding UE to start the handover procedure. Otherwise, the base station A will start the handover procedure of the UE by transmitting a handover request message to the target base station.

In this embodiment, short time is needed to receive the UL signal of the UE. Therefore, the system can accelerate the judging of handover of the UE by the measurement of the UL signal.

It can be seen from the above embodiment that UE is triggered by a triggering message transmitted from a source base station to transmit an UL signal for handover and receive notification messages transmitted by one or more other base station(s) based on the UL signal, and a target base station is determined and the UE is handed over based on the notification messages; and it is practicable to accelerate judging of handover based on measurement of an UL signal, to satisfy handover demand in different scenarios.

### The second embodiment

The embodiment of the present disclosure provides a handover method based on an UL signal, applicable to a communication system where UE is handed over from a source base station to a target base station. The handover method at the target base station side is described in this embodiment, and contents that are the same as the first embodiment will not be repeated.

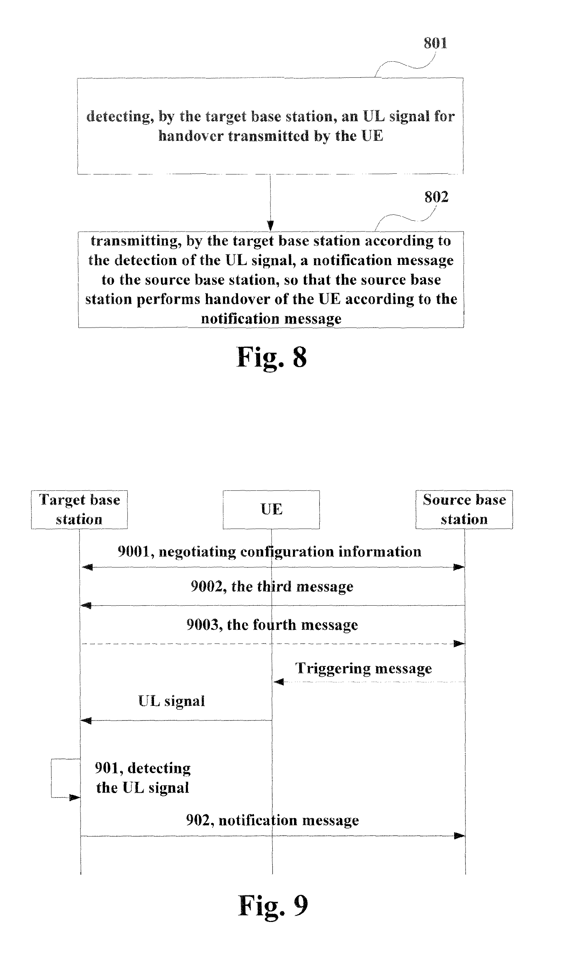

Fig. 8 is a flowchart of the handover method based on an UL signal according to the embodiment of the present disclosure. As shown in Fig. 8, the method includes:
step 801, detecting, by the target base station, an UL signal for handover transmitted by the UE;
step 802, transmitting, by the target base station according to the detection of the UL signal, a notification message to the source base station, so that the source base station performs handover of the UE according to the notification message.

Fig. 9 is another flowchart of the handover method based on an UL signal according to the embodiment of the present disclosure. As shown in Fig. 9, the method includes:
step 901, detecting, by the target base station, an UL signal for handover transmitted by the UE;
step 902, transmitting, by the target base station according to the detection of the UL signal, a notification message to the source base station, so that the source base station performs handover of the UE according to the notification message.

As shown in Fig. 9, the method may further include:
step 9001, negotiating, by the target base station with the source base station, configuration information of the UL signal of the UE.

In a specific implementation, the step 9001 may specifically include: receiving, by the target base station, a first message transmitted by the source base station, the first message containing configuration information of uplink signal of UE of the source base station; and responding, by the target base station, a second message to the source base station, the second message being an acknowledgement message or a message containing configuration information of UL signal of UE of the target base station.

For example, the first message can be an X2 setup request message or an eNB configuration update message, and the second message can be an X2 setup response message, or an eNB configuration update message. However, the present disclosure is not limited to this, and the first and second messages can also be other existing messages or newly defined messages.

As shown in Fig. 9, the method may further include:
step 9002, receiving, by the target base station, a third message transmitted by the source base station, the third message containing configuration information of uplink signal of one or more pieces of UE of the source base station.

As shown in Fig. 9, optionally, the method may further include:
step 9003, transmitting, by the target base station to the source base station, a fourth message, the fourth message being used to reject configuration information of uplink signal of part or all of the UE in the third message.

Wherein, the fourth message may include a cause for rejection and/or configuration recommended information of the UL signal of the UE.

In a specific implementation, for example, the third message can be a handover request message, and the fourth message can be a handover preparation failure message. However, the present disclosure is not limited to this, and the third and fourth messages can also be other existing messages or newly defined messages.

In this embodiment, the configuration information of the UL signal may include any piece of the following information or combinations thereof: transmission power of the UL signal, carrier frequency information or cell information for transmitting the UL signal, target carrier frequency information or cell information for handover of the UE, identification information of the UE, information on the user type to which the UE is applicable, information on the resource for transmitting the UL signal, information on number of times or time of the UL signal, and characteristic information of the UL signal.

Wherein, the information on number of times or time of the UL signal may include: one of the number of times that the UL signal should be transmitted, the maximum number of times of transmitting, and the minimum number of times of transmitting, or combinations thereof; or one of information on time period that permits the transmission of the UL signal, a shortest time length, and a longest time length, or combinations thereof.

Wherein, the characteristic information of the UL signal may include: sequence information for generating the UL signal. However, the present disclosure is not limited to this, and the characteristic information of the UL signal may specifically include other information, and specific contents can be determined according to actual situation.

In a specific implementation, the UL signal may be a preamble sequence signal for random access, and the characteristic information of the UL signal may at least include: at least one piece of information in information entities PRACH-Config, RACH-ConfigCommon or RACH-ConfigDedicated. Or, the UL signal may be a sounding reference signal, and the characteristic information of the UL signal may include: at least one piece of information in an information entity SoundingRS-UL-Config. Or, the UL signal may be a demodulation reference signal, and the characteristic information of the UL signal may at least include: at least one piece of information in an information entity DM-RS-Config.

In this embodiment, the configuration information of the uplink signal can be UE-specific, or can be cell-specific, or can be base-station-specific. Or, in the configuration information of the UL signal, it is practicable that a part is UE-specific, a part is cell-specific, and a part is base-station-specific. Specific configuration can be determined based on actual situation.

In this embodiment, the method may further include: activating, by the target base station, a frequency where the uplink signal is located or a cell receiver to which the frequency corresponds.

In this embodiment, the method may further include: setting a timer by the target base station; and detecting the UL signal before expiration of the timer.

In this embodiment, the method may further include: judging, by the target base station according to the UL signal, whether the UE can be handed over; and transmitting the notification message to the source base station according to a result of judgment.

In this embodiment, the method of judging, by the target base station according to the UL signal, whether the UE can be handed over may specifically include: judging that the UE can be handed over when the detected UL signal meets the preset condition.

Wherein, the preset condition includes: the UL signal having been correctly received with a predefined number of times; and/or in the correctly received UL signals, the number of UL signal with the signal strength or signal quality exceeded a predefined threshold value being greater than a predefined value.

In this embodiment, the notification information may include any piece of the following information or combinations thereof: a UE identifier of the UL signal detected by the target base station, number of detected UL signals, signal strength or signal quality of the detected UL signal, average signal strength or average signal quality of the detected UL signal, and a threshold value of the signal strength or signal quality used in judging that the UL signal can be detected.

It can be seen from the above embodiment that at least one base station detects the UL signal transmitted by the UE, and transmits the notification message to the source base station according to the detection condition, so that the source base station determines the target base station and performs handover of the UE according to the notification message; and it is practicable to accelerate judging of handover based on measurement of an UL signal, to satisfy handover demand in different scenarios.

### The third embodiment

The embodiment of the present disclosure provides a handover method based on an UL signal, applicable to a communication system where UE is handed over from a source base station to a target base station. The handover method at the UE side is described in this embodiment, and contents that are the same as the first embodiment will not be repeated.

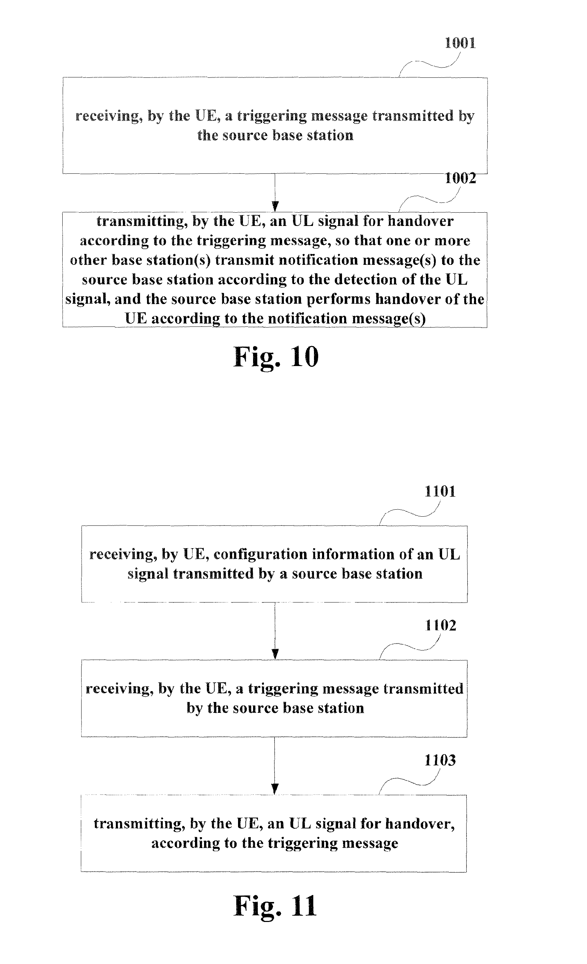

Fig. 10 is a flowchart of the handover method based on an UL signal according to the embodiment of the present disclosure. As shown in Fig. 10, the method includes:
step 1001, receiving, by the UE, a triggering message transmitted by the source base station;
step 1002, transmitting, by the UE, an UL signal for handover according to the triggering message, so that one or more other base station(s) transmit notification message(s) to the source base station according to the detection of the UL signal, and the source base station performs handover of the UE according to the notification message(s).

In one embodiment, the triggering message can include configuration information of the UL signal, and the UE can obtain the configuration information of the UL signal. In another embodiment, the source base station can transmit the configuration information of the UL signal to the UE.

Fig. 11 is another flowchart of the handover method based on an UL signal according to the embodiment of the present disclosure. As shown in Fig. 11, the method includes:
step 1101, receiving, by UE, configuration information of an UL signal transmitted by a source base station;
step 1102, receiving, by the UE, a triggering message transmitted by the source base station;
step 1103, transmitting, by the UE, an UL signal for handover, according to the triggering message.

In this embodiment, the UE can transmit the UL signal for one time or multiple times according to the triggering message.

In this embodiment, the configuration information of the UL signal may include any piece of the following information or combinations thereof: transmission power of the UL signal, carrier frequency information or cell information for transmitting the UL signal, target carrier frequency information or cell information for handover of the UE, identification information of the UE, information on the user type to which the UE is applicable, information on the resource for transmitting the UL signal, information on number of times or time of the UL signal, and characteristic information of the UL signal.

Wherein, the information on number of times or time of the UL signal may include: one of number of times that the UL signal should be transmitted, a maximum number of times of transmitting, or a minimum number of times of transmitting, or combinations thereof; or one of information on time period that permits the transmission of the UL signal, a shortest time length, or a longest time length, or combinations thereof.

Wherein, the characteristic information of the UL signal may specifically include sequence information for generating the UL signal. However, the present disclosure is not limited to this, and the characteristic information of the UL signal may specifically include other information, and specific contents can be determined according to actual situation.

In a specific implementation, the UL signal may be a preamble sequence signal for random access, and the characteristic information of the uplink signal at least includes: at least one piece of information in information entities PRACH-Config, RACH-ConfigCommon or RACH-ConfigDedicated. Or the UL signal may be a sounding reference signal, and the characteristic information of the uplink signal at least includes: at least one piece of information in an information entity SoundingRS-UL-Config. Or, the uplink signal may be a demodulation reference signal, and the characteristic information of the uplink signal at least includes: at least one piece of information in an information entity DM-RS-Config.

In this embodiment, the configuration information of the uplink signal can be UE-specific, or can be cell-specific, or can be base-station-specific. Or, in the configuration information of the UL signal, it is practicable that a part is UE-specific, a part is cell-specific, and a part is base-station-specific.

It can be seen from the above embodiment that the UE transmits the UL signal, and at least one base station transmits the notification message to the source base station according to the detection condition after the UL signal is detected, so that the source base station determines the target base station and performs handover of the UE according to the notification message; and it is practicable to accelerate judging of handover based on measurement of an UL signal, to satisfy handover demand in different scenarios.

### The fourth embodiment

The embodiment of the present disclosure provides a base station, applicable to a communication system where UE is handed over from the base station to a target base station. This embodiment corresponds to the handover method according to the first embodiment, and the same contents will not be repeated.

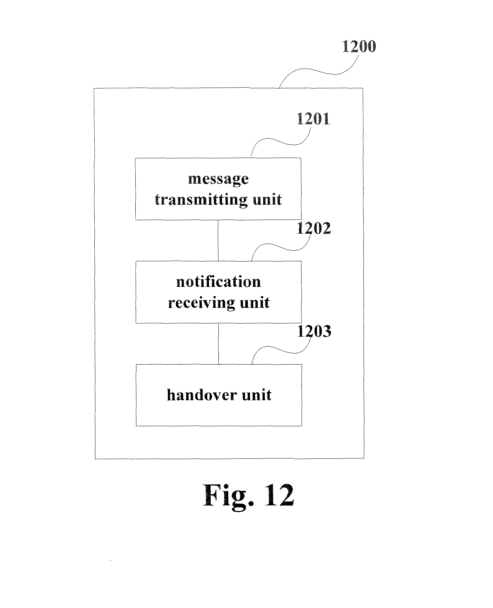

Fig. 12 is a structural schematic of a base station according to the embodiment of the present disclosure. As shown in Fig. 12, the base station 1200 includes: a message transmitting unit 1201, a notification receiving unit 1202 and a handover unit 1203. It is practicable to refer to the relevant art regarding other parts of the base station 1200.

Wherein, the message transmitting unit 1201 is configured to transmit a triggering message to the UE, so as to trigger the UE to transmit an UL signal for handover; the notification receiving unit 1202 is configured to receive a notification messages transmitted by one or more other base station(s) according to detection of the UL signal; and the handover unit 1203 is configured to determine a target base station from the one or more other base station(s) according to the notification messages, and perform handover of the UE.

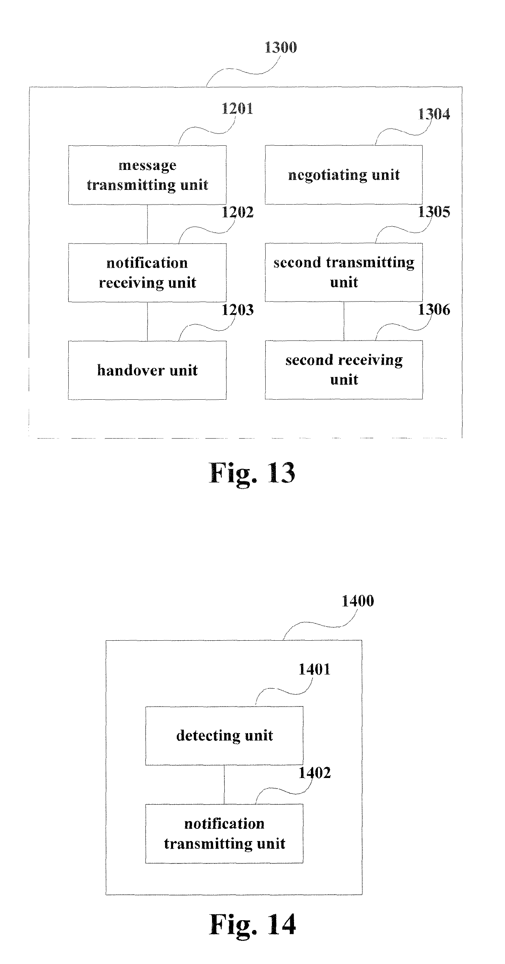

Fig. 13 is another structural schematic of the base station according to the embodiment of the present disclosure. As shown in Fig. 13, the base station 1300 includes: the message transmitting unit 1201, the notification receiving unit 1202 and the handover unit 1203 as described above.

As shown in Fig. 13, the base station 1300 may further include: a negotiating unit 1304 configured to negotiate configuration information of an UL signal of UE with the other base station(s).

In a specific implementation, the negotiating unit 1304 may specifically include a first transmitting unit and a first receiving unit. The first transmitting unit is configured to transmit a first message to the other base station(s), the first message containing configuration information of UL signal of UE of the base station; and the first receiving unit is configured to receive a second message responded by the other base station(s), the second message being an acknowledgement message or a message containing configuration information of UL signal of UE of the other base station(s).

As shown in Fig. 13, the base station 1300 may further include: a second transmitting unit 1305, configured to transmit a third message to the other base station(s), the third message containing configuration information of uplink signal of one or more pieces of UE of the base station.

As shown in Fig. 13, the base station 1300 may further include: a second receiving unit 1306, configured to receive a fourth message transmitted by the other base station(s), the fourth message being used to reject configuration information of the UL signal of part or all of the UE in the third message.

In this embodiment, the triggering message transmitted by the message transmitting unit 1201 contains configuration information of the UL signal. In another embodiment, the base station may further include: an information transmitting unit configured to transmit the configuration information of the UL signal to the UE.

It can be seen from the above embodiment that UE is triggered by a triggering message transmitted from a source base station to transmit an UL signal for handover and receive notification messages transmitted by one or more other base station(s) based on the UL signal, and a target base station is determined and the UE is handed over based on the notification messages; and it is practicable to accelerate judging of handover based on measurement of an UL signal, to satisfy handover demand in different scenarios.

### The fifth embodiment

The embodiment of the present disclosure provides a base station, applicable to a communication system where UE is handed over from a source base station to the base station. This embodiment corresponds to the handover method according to the second embodiment, and the same contents will not be repeated.

Fig. 14 is a structural schematic of a base station according to the embodiment of the present disclosure. As shown in Fig. 14, the base station 1400 includes: a detecting unit 1401 and a notification transmitting unit 1402. It is practicable to refer to the relevant art regarding other parts of the base station 1400.

Wherein, the detecting unit 1401 is configured to detect an UL signal for handover transmitted by the UE; and the notification transmitting unit 1402 is configured to transmit a notification message to the source base station according to detection of the UL signal, so that the source base station performs handover of the UE according to the notification message.

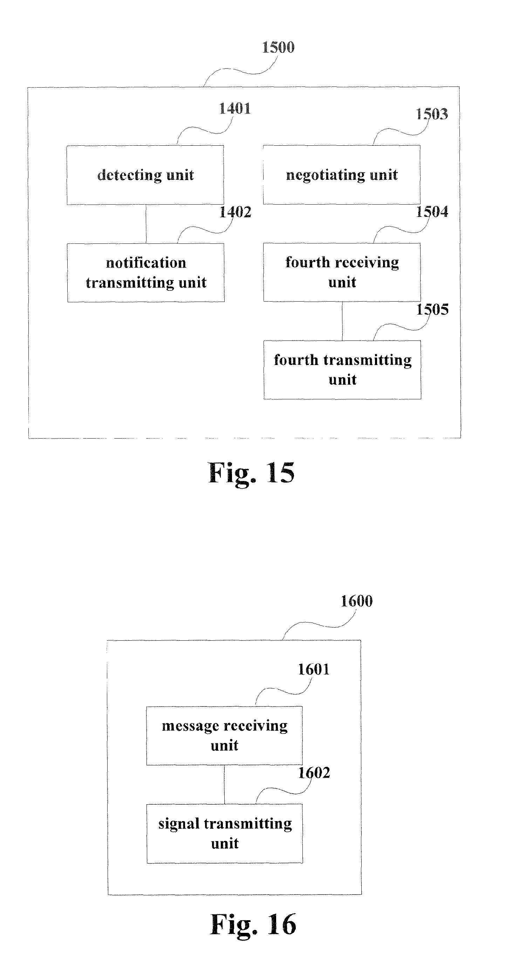

Fig. 15 is another structural schematic of the base station according to the embodiment of the present disclosure. As shown in Fig. 15, the base station 1500 includes: the detecting unit 1401 and the notification transmitting unit 1402 as described above.

As shown in Fig. 15, the base station 1500 may further include: a negotiating unit 1503 configured to negotiate configuration information of an UL signal of UE with the source base station.

In a specific implementation, the negotiating unit 1503 can specifically include a third transmitting unit and a third receiving unit. The third receiving unit is configured to receive a first message transmitted by the source base station, the first message containing configuration information of UL signal of UE of the source base station; and the third transmitting unit is configured to respond a second message to the source base station, the second message being an acknowledgement message or a message containing configuration information of UL signal of UE of the base station.

As shown in Fig. 15, the base station 1500 may further include: a fourth receiving unit 1504, configured to receive a third message transmitted by the source base station, the third message containing configuration information of UL signal of one or more pieces of UE of the source base station.

As shown in Fig. 15, the base station 1500 may further include: a fourth transmitting unit 1505, configured to transmit a fourth message to the source base station, the fourth message being used to reject configuration information of UL signal of part or all of the UE in the third message.

In another implementation, the base station may further include: an activating unit, configured to activate a frequency where the UL signal is located or a cell receiver to which the frequency corresponds.

In another implementation, the base station may further include: a timing setting unit, configured to set a timer; and the detecting unit 1401 is configured to detect the UL signal before expiration of the timer.

In another implementation, the base station may further include: a judging unit, configured to judge whether the UE can be handed over according to an UL signal; and the notification transmitting unit 1402 is configured to transmit the notification message to the source base station according to a result of judgment.

It can be seen from the above embodiment that at least one base station detects the UL signal transmitted by the UE, and transmits the notification message to the source base station according to the detection condition, so that the source base station determines the target base station and performs handover of the UE according to the notification message; and it is practicable to accelerate judging of handover based on measurement of an UL signal, to satisfy handover demand in different scenarios.

### The sixth embodiment

The embodiment of the present disclosure provides UE, applicable to a communication system where UE is handed over from a source base station to a target base station. This embodiment corresponds to the handover method according to the third embodiment, and the same contents will not be repeated.

Fig. 16 is a structural schematic of UE according to the embodiment of the present disclosure. As shown in Fig. 16, the UE 1600 includes: a message receiving unit 1601 and a signal transmitting unit 1602. It is practicable to refer to the relevant art regarding other parts of the UE 1600.

Wherein, the message receiving unit 1601 is configured to receive a triggering message transmitted by the source base station; and the signal transmitting unit 1602 is configured to transmit an UL signal for handover according to the triggering message, so that one or more other base station(s) transmit notification messages to the source base station according to the detection of the UL signal, and the source base station performs handover of the UE according to the notification messages.

In one implementation, the triggering message received by the message receiving unit 1601 contains configuration information of the UL signal. In another embodiment, the UE receives the configuration information of the UL signal transmitted by the base station.

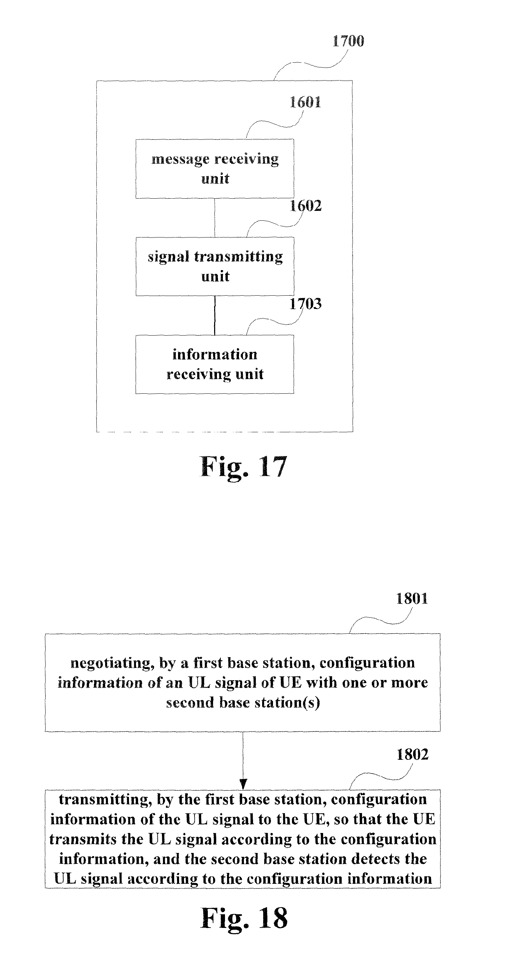

Fig. 17 is another structural schematic of UE according to the embodiment of the present disclosure. As shown in Fig. 17, the UE 1700 includes: the message receiving unit 1601 and the signal transmitting unit 1602 as described above.

As shown in Fig. 17, the UE 1700 may further include: an information receiving unit 1703, configured to receive configuration information of the UL signal transmitted by the source base station.

In this embodiment, the signal transmitting unit 1602 may be configured to transmit the UL signal for one time or multiple times according to the triggering message.

It can be seen from the above embodiment that the UE transmits the UL signal, and at least one base station transmits the notification message to the source base station according to the detection condition after the UL signal is detected, so that the source base station determines the target base station and performs handover of the UE according to the notification message; and it is practicable to accelerate judging of handover based on measurement of an UL signal, to satisfy handover demand in different scenarios.

### The seventh embodiment

The embodiment of the present disclosure provides a method for configuring an uplink signal. The configuring method at a first base station side is described in detail as below, and contents that are same as the previous embodiments will not be repeated.

Fig. 18 is a flowchart of the configuring method according to the embodiment of the present disclosure. As shown in Fig. 18, the method includes:
step 1801, negotiating, by a first base station, configuration information of an UL signal of UE with one or more second base station(s);
step 1802, transmitting, by the first base station, configuration information of the UL signal to the UE, so that the UE transmits the UL signal according to the configuration information and the second base station detects the UL signal according to the configuration information.

In one implementation, the step 801 of negotiating configuration information of the UL signal of the UE, by the first base station with the second base station can specifically include: transmitting from the first base station to the second base station a first message which contains configuration information of the UL signal of one or more pieces of UE of the first base station; receiving, by the first base station, a second message responded by the second base station, the second message being an acknowledgement message or a message containing the configuration information of the UL signal of one or more pieces of UE of the other base station.

In another implementation, the method may further include: transmitting a third message by the first base station to the second base station, the third message containing configuration information of UL signal of one or more pieces of UE of the first base station.

In a specific implementation, alternatively, the method may further include: receiving, by the first base station, a fourth message transmitted by the second base station, the fourth message being used to reject configuration information of UL signal of part or all of the UE in the third message.

In this embodiment, the configuration information of the UL signal includes any piece of the following information or combinations thereof: transmission power of the UL signal, carrier frequency information or cell information for transmitting the UL signal, target carrier frequency information or cell information for handover of the UE, identification information of the UE, information on the user type to which the UE is applicable, information on the resource for transmitting the UL signal, information on number of times or time of the UL signal, and characteristic information of the UL signal.

In a specific implementation, the information on number of times or time of the UL signal may include: one of number of times that the UL signal should be transmitted, a maximum number of times of transmitting, or a minimum number of times of transmitting, or combinations thereof; or one of information on time period that permits the transmission of the UL signal, a shortest time length, or a longest time length, or combinations thereof.

In a specific implementation, the characteristic information of the UL signal may specifically include sequence information for generating the UL signal. However, the present disclosure is not limited to this.

For example, the UL signal may be a preamble sequence signal for random access, and the characteristic information of the UL signal at least includes: at least one piece of information in information entities PRACH-Config, RACH-ConfigCommon or RACH-ConfigDedicated. Or, the UL signal may be a sounding reference signal, and the characteristic information of the UL signal at least includes: at least one piece of information in an information entity SoundingRS-UL-Config. Or, the UL signal may be a demodulation reference signal, and the feature information of the UL signal may at least include: at least one piece of information in an information entity DM-RS-Config.

In this embodiment, the method may further include: transmitting a triggering message by the first base station to the UE, so as to trigger the UE to transmit an UL signal for handover; receiving, by the first base station, notification messages transmitted by one or more second base station(s) according to detection of the UL signal; and determining the target base station by the first base station from the one or more other base station(s) according to the notification messages, and performing handover of the UE.

In a specific implementation, the notification information includes any piece of the following information or combinations thereof: a UE identifier of the UL signal detected by the second base station, number of detected UL signals, signal strength or signal quality of the detected UL signal, average signal strength or average signal quality of the detected UL signal, weighted average signal strength or weighted average signal quality of the detected UL signal, and a threshold value of the signal strength or signal quality used in judging that the UL signal can be detected.

It can be seen from the above embodiment that, the first base station negotiates configuration information of the UL signal of the UE with one or more second base station(s), and the first base station transmits configuration information of the UL signal to the UE, to be able to satisfy demand in different scenarios.

### The eighth embodiment

The embodiment of the present disclosure provides a method for configuring an uplink signal. The configuring method at a second base station side is described in detail as below, and contents that are same as the previous embodiments will not be repeated.

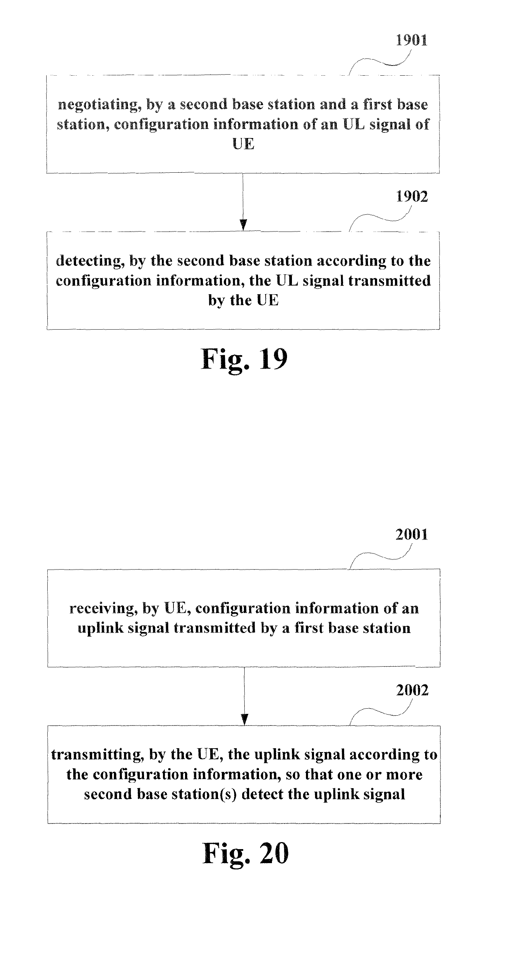

Fig. 19 is a flowchart of the configuring method according to the embodiment of the present disclosure. As shown in Fig. 19, the method includes:
step 1901, negotiating, by a second base station and a first base station, configuration information of an UL signal of UE;
step 1902, detecting, by the second base station according to the configuration information, the UL signal transmitted by the UE.

In one implementation, the step 1901 of negotiating configuration information of an UL signal of UE by the second base station and the first base station can specifically include: receiving, by the second base station, a first message transmitted by the first base station, the first message containing configuration information of UL signal of UE of the first base station; and responding a second message to the first base station, the second message being an acknowledgement message or a message containing configuration information of UL signal of UE of the second base station.

In another implementation, the method may further include: receiving, by the second base station, a third message transmitted by the first base station, the third message containing configuration information of UL signal of one or more pieces of UE of the first base station.

Alternatively, the method may further include: transmitting a fourth message by the second base station to the first base station, the fourth message being used to reject configuration information of UL signal of part or all of the UE in the third message.

In this embodiment, the configuration information of the UL signal includes any piece of the following information or combinations thereof: transmission power of the UL signal, carrier frequency information or cell information for transmitting the UL signal, target carrier frequency information or cell information for handover of the UE, identification information of the UE, information on the user type to which the UE is applicable, information on the resource for transmitting the UL signal, information on number of times or time of the UL signal, and characteristic information of the UL signal.

In one implementation, the method may further include: transmitting a notification message to the first base station according to detection of the UL signal, so that the first base station performs handover of the UE according to the notification message.

In another implementation, the method may further include: activating, by the second base station, a frequency where the UL signal is located or a cell receiver to which the frequency corresponds.

It can be seen from the above embodiment that, the first base station negotiates configuration information of the UL signal of the UE with one or more second base station(s), and the first base station transmits configuration information of the UL signal to the UE, and the second base station detects the UL signal, to be able to satisfy demand in different scenarios.

### The ninth embodiment

The embodiment of the present disclosure provides a method for configuring an uplink signal. The configuring method at a UE side is described in detail as below, and contents that are same as the previous embodiments will not be repeated.

Fig. 20 is a flowchart of the configuring method according to the embodiment of the present disclosure. As shown in Fig. 20, the method includes:
step 2001, receiving, by UE, configuration information of an uplink signal transmitted by a first base station;
step 2002, transmitting, by the UE, the uplink signal according to the configuration information, so that one or more second base station(s) detect the uplink signal.

In this embodiment, the configuration information of the UL signal includes any piece of the following information or combinations thereof: transmission power of the UL signal, carrier frequency information or cell information for transmitting the UL signal, target carrier frequency information or cell information for handover of the UE, identification information of the UE, information on the user type to which the UE is applicable, information on the resource for transmitting the UL signal, information on number of times or time of the UL signal, and characteristic information of the UL signal.

In one implementation, the method may further include: receiving, by the UE, a triggering message transmitted by the first base station; and transmitting, by the UE, the uplink signal according to the triggering message and the configuration information.

It can be seen from the above embodiment that, the UE receives a triggering message transmitted by the first base station, and the UE transmits the UL signal, and the second base station detects the UL signal, to be able to satisfy demand in different scenarios.

### The tenth embodiment

The embodiment of the present disclosure provides a base station which corresponds to the configurating method in the seventh embodiment, and the same contents will not be repeated herein.

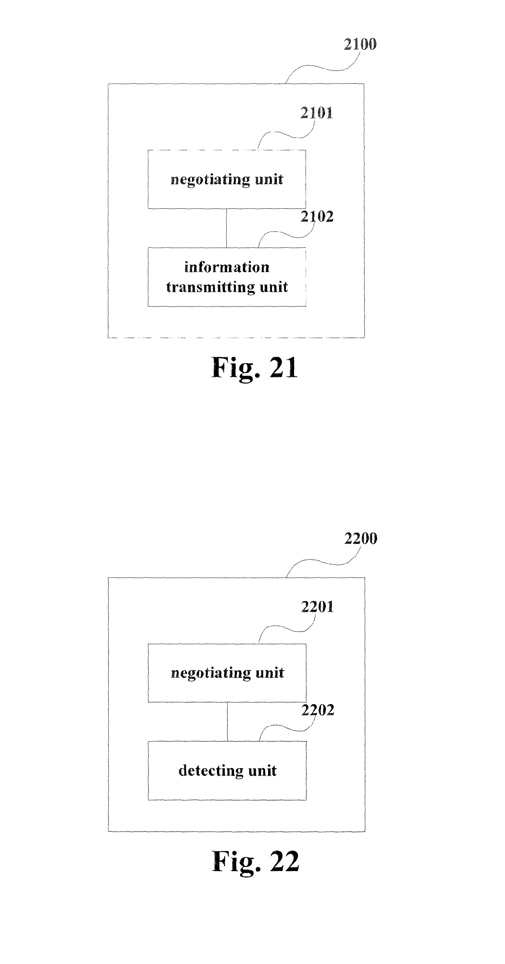

Fig. 21 is a structural schematic of a base station according to the embodiment of the present disclosure. As shown in Fig. 21, the base station 2100 includes: a negotiating unit 2101 and an information transmitting unit 2102. It is practicable to refer to the relevant art regarding other parts of the base station 2100.

Wherein, the negotiating unit 2101 is configured to negotiate configuration information of an UL signal of UE with one or more second base station(s); and the information transmitting unit 2102 is configured to transmit the configuration information of the uplink signal to the UE.

In one implementation, the negotiating unit 2101 may specifically include a first transmitting unit and a first receiving unit. The first transmitting unit is configured to transmit a first message to the second base station, the first message containing configuration information of UL signal of one or more pieces of UE of the base station 2100; and the first receiving unit is configured to receive a second message responded by the second base station, the second message being an acknowledgement message or a message containing configuration information of UL signal of UE of the second base station.

In another implementation, the base station 2100 may further include: a second transmitting unit, configured to transmit a third message to the second base station, the third message containing configuration information of UL signal of one or more pieces of UE of the base station 2100.

Optionally, the base station 2100 may further include: a second receiving unit, configured to receive a fourth message transmitted by the second base station, the fourth message being used to reject configuration information of UL signal of part or all of the UE in the third message.

In another implementation, the base station 2100 may further include: a message transmitting unit, a notification receiving unit and a handover unit. Wherein, the message transmitting unit is configured to transmit a triggering message to the UE, so as to trigger the UE to transmit an UL signal for handover; the notification receiving unit is configured to receive notification message(s) transmitted by one or more second base station(s) according to detection of the UL signal; and the handover unit is configured to determine a target base station from the one or more second base station(s) according to the notification message(s), and perform handover of the UE.

It can be seen from the above embodiment that, the first base station negotiates configuration information of the UL signal of the UE with one or more second base station(s), and the first base station transmits configuration information of the UL signal to the UE, to be able to satisfy demand in different scenarios.

### The eleventh embodiment

The embodiment of the present disclosure provides a base station which corresponds to the configurating method in the eighth embodiment, and the same contents will not be repeated herein.

Fig. 22 is a structural schematic of a base station according to the embodiment of the present disclosure. As shown in Fig. 22, the base station 2200 includes: a negotiating unit 2201 and a detecting unit 2202. It is practicable to refer to the relevant art regarding other parts of the base station 2200.

Wherein, the negotiating unit 2201 is configured to negotiate configuration information of the UL signal of UE with a first base station; and the detecting unit 2202 is configured to detect the UL signal transmitted by the UE according to the configuration information.

In one implementation, the negotiating unit 2201 may specifically include a third transmitting unit and a third receiving unit. The third receiving unit is configured to receive a first message transmitted by the first base station, the first message containing configuration information of UL signal of one or more pieces of UE of the first base station; and the third transmitting unit is configured to respond a second message to the first base station, the second message being an acknowledgement message or a message containing configuration information of the UL signal of one or more pieces of UE of the base station 2200.

In another implementation, the base station 2200 may further include: a fourth receiving unit, configured to receive a third message transmitted by the first base station, the third message containing configuration information of UL signal of one or more pieces of UE of the first base station.

Optionally, the base station 2200 may further include: a fourth transmitting unit, configured to transmit a fourth message to the first base station, the fourth message being used to reject configuration information of UL signal of part or all of the UE in the third message.

In another implementation, the base station 2200 may further include: a notification transmitting unit, configured to transmit a notification message to the first base station according to detection of the UL signal, so that the first base station performs handover of the UE according to the notification message.

In another implementation, the base station 2200 may further include: an activating unit, configured to activate a frequency where the UL signal is located or a cell receiver to which the frequency corresponds.

It can be seen from the above embodiment that, the first base station negotiates configuration information of the UL signal of the UE with one or more second base station(s), and the first base station transmits configuration information of the UL signal to the UE, and the second base station detects the UL signal, to be able to satisfy demand in different scenarios.

### The twelfth embodiment

The embodiment of the present disclosure provides UE which corresponds to the configuring method in the ninth embodiment, and the same contents will not be repeated herein.

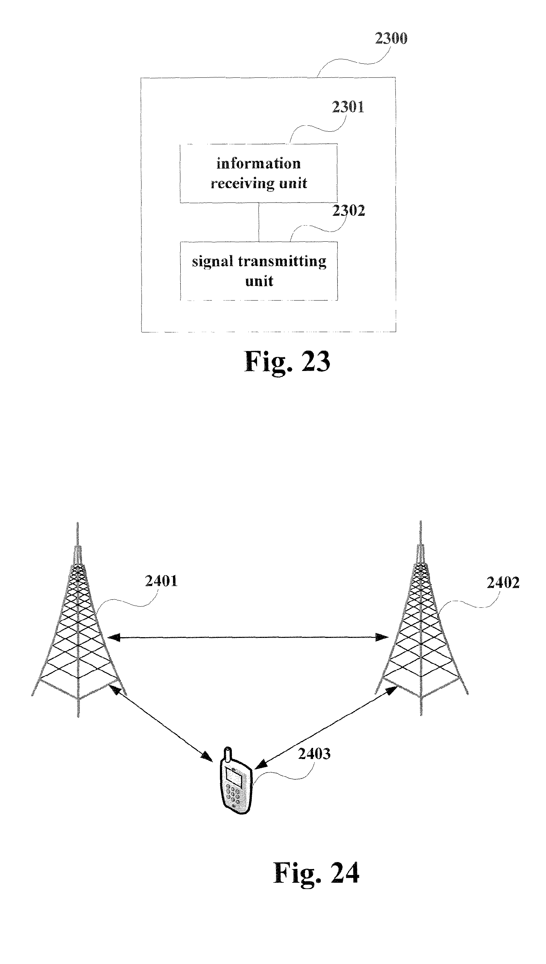

Fig. 23 is a structural schematic of UE according to the embodiment of the present disclosure. As shown in Fig. 23, the UE 2300 includes: an information receiving unit 2301 and a signal transmitting unit 2302. It is practicable to refer to the relevant art regarding other parts of the UE 2300.

Wherein, the information receiving unit 2301 is configured to receive configuration information of an uplink signal transmitted by a first base station; and the signal transmitting unit 2302 is configured to transmit the UL signal according to the configuration information, so that one or more second base station(s) detect the UL signal.

In one implementation, the UE 2300 may further includes: a message receiving unit, configured to receive a triggering message transmitted by the first base station; and the signal transmitting unit 2302 is further configured to transmit the UL signal according to the triggering message and the configuration information.

It can be seen from the above embodiment that, the UE receives a triggering message transmitted by the first base station, and the UE transmits the UL signal, and the second base station detects the UL signal, to be able to satisfy demand in different scenarios.

### The thirteenth embodiment

The embodiment of the present disclosure provides a communication system in which UE is handed over from a source base station to a target base station.

Fig. 24 is a structural schematic of a communication system according to the embodiment of the present disclosure. As shown in Fig. 24, the communication system 2400 includes: a first base station 2401, a second base station 2402 and UE 2403.

Wherein, the first base station 2401 can be the source base station as described in the fourth embodiment, the second base station 2402 can be the target base station as described in the fifth embodiment, and the UE 1803 can be the UE as described in the sixth embodiment.

Or, the first base station 2401 can be the base station as described in the tenth embodiment, the second base station 2402 can be the base station as described in the eleventh embodiment, and the UE 1803 can be the UE as described in the twelfth embodiment.

It is practicable to refer to the first through twelfth embodiments regarding other contents of the communication system 1800. It is worth noting that, Fig. 24 only schematically shows the structure of the communication system. However, the present disclosure is not limited to this, and specific embodiments can be determined based on actual situation.

The embodiment of the present disclosure further provides a computer-readable program, wherein when the program is executed in a base station, the program enables a computer to carry out the handover method based on uplink signal as described in the above first or second embodiment, or the method for configuring uplink signal as described in the above seventh or eighth embodiment, in the base station.

The embodiment of the present disclosure further provides a storage medium in which a computer-readable program is stored, wherein the computer-readable program enables a computer to carry out the handover method based on UL signal as described in the above first or second embodiment, or the method for configuring UL signal as described in the above seventh or eighth embodiment.

The embodiment of the present disclosure further provides a computer-readable program, wherein when the program is executed in UE, the program enables a computer to carry out the handover method based on UL signal as described in the above third embodiment, or the method for configuring UL signal as described in the above ninth embodiment, in the UE.

The embodiment of the present disclosure further provides a storage medium in which a computer-readable program is stored, wherein the computer-readable program enables a computer to carry out the handover method based on UL signal as described in the above third embodiment, or the method for configuring UL signal as described in the above ninth embodiment, in UE.

The above devices and methods of the disclosure can be implemented by hardware, or by combination of hardware with software. The disclosure relates to such a computer readable program that when the program is executed by a logic component, it is possible for the logic component to implement the preceding devices or constitute components, or to realize the preceding various methods or steps. The disclosure further relates to a storage medium for storing the above programs, such as a hard disk, a magnetic disk, an optical disk, a DVD, a flash memory and the like.

For one or more of functional blocks and/or combination of one or more functional blocks described in the accompanying drawings, it can be implemented as a general purpose processor, a digital signal processor (DSP), an application specific integrated circuit (ASIC), a field programmable gate array (FPGA) or other programmable logic devices, a discrete gate or transistor logic device, a discrete hardware component or any suitable combination thereof for executing the functions described in the present application. For one or more of functional blocks and/or combination of one or more functional blocks described in the accompanying drawings, it also can be implemented as combination of computation devices, such as combination of a DSP and a microprocessor, a plurality of microprocessors, one or more microprocessors in communication combination with the DSP or any other such configuration.

Hereinbefore the disclosure is described by combining specific embodiments, but those skilled in the art should understand, these descriptions are exemplary and are not limitation to the protection scope of the disclosure. Those skilled in the art can make various variations and modifications to the disclosure according to principles of the disclosure, and these variations and modifications shall fall within the scope of the disclosure.

## Claims

1. A handover method based on uplink signal, applicable to a communication system where UE is handed over from a source base station to a target base station, wherein the method comprises:
transmitting, by the source base station to the UE, a triggering message, to trigger the UE to transmit an uplink signal for handover;
receiving notification message(s) transmitted by one or more other base station(s), wherein the notification message is transmitted according to detection of the uplink signal; and
determining, by the source base station, the target base station from the one or more other base station(s) according to the notification message(s), and performing handover of the UE.

2. The handover method according to claim 1, wherein the method further comprises:
negotiating, by the source base station and the other base station, configuration information of the uplink signal of the UE.

3. The handover method according to claim 2, wherein the negotiating, by the source base station and the other base station, configuration information of the uplink signal of the UE comprises:
transmitting, by the source base station, a first message to the other base station, the first message containing configuration information of uplink signal of UE of the source base station; and
receiving a second message responded by the other base station, the second message being an acknowledgement message or a message containing configuration information of uplink signal of UE of the other base station.

4. The handover method according to claim 1, wherein the method further comprises:
transmitting, by the source base station, a third message to the other eNB, the third message containing configuration information of uplink signal of one or more pieces of UE of the source base station.

5. The handover method according to claim 4, wherein the method further comprises:
receiving, by the source base station, a fourth message transmitted by the other base station, the fourth message being used to reject configuration information of uplink signal of part or all of the UE in the third message.

6. The handover method according to claim 5, wherein the fourth message comprises a cause for rejection and/or recommended configuration information of uplink signal of UE.

7. The handover method according to claim 1, wherein the method further comprises:
transmitting, by the source base station, configuration information of the uplink signal to the UE.

8. The handover method according to claim 1, wherein the triggering message contains configuration information of the uplink signal.

9. The handover method according to any one of claims 2-8, wherein the configuration information of the uplink signal comprises any piece of the following information or combinations thereof:
transmission power of the uplink signal, carrier frequency information or cell information for transmitting the uplink signal, target carrier frequency information or cell information for handover of the UE, identification information of the UE, information on the user type to which the UE is applicable, information on the resource for transmitting the uplink signal, information on number of times or time of the uplink signal, and characteristic information of the uplink signal.

10. The handover method according to claim 9, wherein the information on number of times or time of the uplink signal comprises:
one of number of times that the uplink signal should be transmitted, a maximum number of times of transmitting, and a minimum number of times of transmitting, or combinations thereof;
or
one of information on time period that permits the transmission of the uplink signal, a shortest time length, and a longest time length, or combinations thereof.

11. The handover method according to claim 9, wherein the characteristic information of the uplink signal comprises sequence information for generating the uplink signal.

12. The handover method according to claim 9, wherein the uplink signal is a preamble sequence signal for random access, and the characteristic information of the uplink signal comprises at least one piece of information in information entities PRACH-Config, RACH-ConfigCommon or RACH-ConfigDedicated;
or the uplink signal is a sounding reference signal, and the characteristic information of the uplink signal comprises at least one piece of information in an information entity SoundingRS-UL-Config;
or the uplink signal is a demodulation reference signal, and the characteristic information of the uplink signal comprises at least one piece of information in an information entity DM-RS-Config.

13. The handover method according to any one of claims 2-8, wherein the configuration information of the uplink signal is UE-specific, or is cell-specific, or is base station-specific.

14. The handover method according to any one of claims 2-8, wherein in the configuration information of the uplink signal, a part is UE-specific, a part is cell-specific, and a part is base station-specific.

15. The handover method according to claim 1, wherein the notification information comprises any piece of the following information or combinations thereof:
a UE identifier of the uplink signal detected by the other base station, number of detected uplink signals, signal strength or signal quality of the detected uplink signal, average signal strength or average signal quality of the detected uplink signal, weighted average signal strength or weighted average signal quality of the detected uplink signal, and a threshold value of the signal strength or signal quality used in judging that the uplink signal can be detected.

16. A handover method based on uplink signal, applicable to a communication system where UE is handed over from a source base station to a target base station, wherein the method comprises:
detecting, by the target base station, an uplink signal for handover transmitted by the UE; and
transmitting a notification message to the source base station according to detection of the uplink signal, so that the source base station performs handover of the UE according to the notification message.

17. The handover method according to claim 16, wherein the method further comprises:
negotiating, by the target base station and the source base station, configuration information of the uplink signal of the UE.

18. The handover method according to claim 17, wherein the negotiating, by the target base station and the source base station, configuration information of the uplink signal of the UE comprises:
receiving, by the target base station, a first message transmitted by the source base station, the first message containing configuration information of uplink signal of UE of the source base station; and
responding a second message to the source base station, the second message being an acknowledgement message or a message containing configuration information of uplink signal of UE of the target base station.

19. The handover method according to claim 16, wherein the method further comprises:
receiving, by the target base station, a third message transmitted by the source base station, the third message containing configuration information of uplink signal of one or more pieces of UE of the source base station.

20. The handover method according to claim 19, wherein the method further comprises:
transmitting, by the target base station, a fourth message to the source base station, the fourth message being used to reject configuration information of uplink signal of part or all of the UE in the third message.

21. The handover method according to any one of claims 17-20, wherein the configuration information of the uplink signal comprises any piece of the following information or combinations thereof:
transmission power of the uplink signal, carrier frequency information or cell information for transmitting the uplink signal, target carrier frequency information or cell information for handover of the UE, identification information of the UE, information on the user type to which the UE is applicable, information on the resource for transmitting the uplink signal, information on number of times or time of the uplink signal, and characteristic information of the uplink signal.

22. The handover method according to claim 16, wherein the method further comprises:
activating, by the target base station, a frequency where the uplink signal is located or a cell receiver to which the frequency corresponds.

23. The handover method according to claim 16, wherein the method further comprises:
setting a timer by the target base station;
and detecting the uplink signal before expiration of the timer.

24. The handover method according to claim 16, wherein the method further comprises:
judging, by the target base station according to whether the detected uplink signal meet preset condition, whether the UE can be handed over; and
transmitting the notification message to the source base station according to a result of judgment.

25. The handover method according to claim 24, wherein the preset condition comprises:
the uplink signal having been correctly received with a predefined number of times, and/or
in the correctly received uplink signals, the number of uplink signal with signal strength or signal quality exceeded a predefined threshold value being greater than a predefined value.

26. The handover method according to claim 16, wherein the notification information comprises any piece of the following information or combinations thereof:
a UE identifier of the uplink signal detected by the target base station, number of detected uplink signals, signal strength or signal quality of the detected uplink signal, average signal strength or average signal quality of the detected uplink signal, weighted average signal strength or weighted average signal quality of the detected uplink signal, and a threshold value of the signal strength or signal quality used in judging that the uplink signal can be detected.

27. A handover method based on uplink signal, applicable to a communication system where UE is handed over from a source base station to a target base station, wherein the method comprises:
receiving, by the UE, a triggering message transmitted by the source base station; and
transmitting an uplink signal for handover according to the triggering message, so that one or more other base station(s) transmit notification message(s) to the source base station according to the detection of the uplink signal, and the source base station performs handover of the UE according to the notification messages.

28. The handover method according to claim 27, wherein the method further comprises:
receiving, by the UE, configuration information of the uplink signal transmitted by the source base station.

29. The handover method according to claim 27, wherein the triggering message contains configuration information of the uplink signal.

30. The handover method according to claim 27, wherein the UE transmits the uplink signal once or multiple times according to the triggering message.

31. The handover method according to any one of claims 28-30, wherein the configuration information of the uplink signal comprises any piece of the following information or combinations thereof:
transmission power of the uplink signal, carrier frequency information or cell information for transmitting the uplink signal, target carrier frequency information or cell information for handover of the UE, identification information of the UE, information on the user type to which the UE is applicable, information on the resource for transmitting the uplink signal, information on number of times or time of the uplink signal, and characteristic information of the uplink signal.

32. A base station, applicable to a communication system where UE is handed over from the station to a target base station, wherein the base station comprises:
a message transmitting unit, configured to transmit a triggering message to the UE, to trigger the UE to transmit an uplink signal for handover;
a notification receiving unit, configured to receive notification message(s) transmitted by one or more other base station(s), wherein the notification message is transmitted according to detection of the uplink signal; and
a handover unit, configured to determine the target base station from the one or more other base station(s) according to the notification messages, and perform handover of the UE.

33. The base station according to claim 32, wherein the base station further comprises:
a negotiating unit, configured to negotiate with the other base station configuration information of the uplink signal of the UE.

34. The base station according to claim 33, wherein the negotiating unit comprises:
a first transmitting unit, configured to transmit a first message to the other base station, the first message containing configuration information of uplink signal of UE of the source base station; and
a first receiving unit, configured to receive a second message responded by the other base station, the second message being an acknowledgement message or a message containing configuration information of uplink signal of UE of the other base station.

35. The base station according to claim 32, wherein the base station further comprises:
a second transmitting unit, configured to transmit a third message to the other base station, the third message containing configuration information of uplink signal of one or more pieces of UE of the base station.

36. The base station according to claim 32, wherein the base station further comprises:
a second receiving unit, configured to receive a fourth message transmitted by the other base station, the fourth message being used to reject configuration information of the uplink signal of part or all of the UE in the third message.

37. The base station according to claim 32, wherein the base station further comprises:
an information transmitting unit, configured to transmit the configuration information of the uplink signal to the UE.

38. A base station, applicable to a communication system where UE is handed over from a source base station to the base station, wherein the base station comprises:
a detecting unit, configured to detect an uplink signal for handover transmitted by the UE; and
a notification transmitting unit, configured to transmit a notification message to the source base station according to detection of the uplink signal, so that the source base station performs handover of the UE according to the notification message.

39. The base station according to claim 38, wherein the base station further comprises:
a negotiating unit, configured to negotiate with the source base station configuration information of the uplink signal of the UE.

40. The base station according to claim 39, wherein the negotiating unit comprises:
a third receiving unit, configured to receive a first message transmitted by the source base station, the first message containing configuration information of uplink signal of UE of the source base station; and
a third transmitting unit, configured to respond a second message to the source base station, the second message being an acknowledgement message or a message containing configuration information of uplink signal of UE of the base station.

41. The base station according to claim 38, wherein the base station further comprises:
a fourth receiving unit, configured to receive a third message transmitted by the source base station, the third message containing configuration information of uplink signal of one or more pieces of UE of the source base station.

42. The base station according to claim 41, wherein the base station further comprises:
a fourth transmitting unit, configured to transmit a fourth message to the source base station, the fourth message being used to reject configuration information of uplink signal of part or all of the UE in the third message.

43. The base station according to claim 38, wherein the base station further comprises:
an activating unit, configured to activate a frequency where the uplink signal is located or a cell receiver to which the frequency corresponds.

44. The base station according to claim 38, wherein the base station further comprises:
a timing setting unit, configured to set a timer;
and the detecting unit detects the uplink signal before expiration of the timer.

45. The base station according to claim 38, wherein the base station further comprises:
a judging unit, configured to judge whether the UE can be handed over according to whether the detected uplink signal meet preset condition;
and the notification transmitting unit transmits the notification message to the source base station according to a result of judgment.

46. UE, applicable to a communication system where UE is handed over from a source base station to a target base station, wherein the UE comprises:
a message receiving unit, configured to receive a triggering message transmitted by the source base station; and
a signal transmitting unit, configured to transmit an uplink signal for handover according to the triggering message, so that one or more other base station(s) transmit notification message(s) to the source base station according to the detection of the uplink signal, and the source base station performs handover of the UE according to the notification message(s).

47. The UE according to claim 46, wherein the UE further comprises:
an information receiving unit, configured to receive configuration information of the uplink signal transmitted by the source base station.

48. A method for configuring uplink signal, comprising:
negotiating, by a first base station and a second base station, configuration information of an uplink signal of UE; and
transmitting, by the first base station, configuration information of the uplink signal to the UE, so that the UE transmits the uplink signal according to the configuration information and the second base station detects the uplink signal according to the configuration information.

49. The method according to claim 48, wherein the negotiating, by a first base station and a second base station, configuration information of the uplink signal of UE comprises:
transmitting, by the first base station, a first message to the second base station, the first message containing configuration information of uplink signal of UE of the first base station; and
receiving a second message responded by the second base station, the second message being an acknowledgement message or a message containing configuration information of uplink signal of UE of the second base station.

50. The method according to claim 48, wherein the method further comprises:
transmitting, by the first base station, a third message to the second base station, the third message containing configuration information of uplink signal of one or more pieces of UE of the first base station.

51. The method according to claim 50, wherein the method further comprises:
receiving, by the first base station, a fourth message transmitted by the second base station, the fourth message being used to reject configuration information of uplink signal of part or all of the UE in the third message.

52. The method according to any one of claims 48-51, wherein the configuration information of the uplink signal comprises any piece of the following information or combinations thereof:
transmission power of the uplink signal, carrier frequency information or cell information for transmitting the uplink signal, target carrier frequency information or cell information for handover of the UE, identification information of the UE, information on the user type to which the UE is applicable, information on the resource for transmitting the uplink signal, information on number of times or time of the uplink signal, and characteristic information of the uplink signal.

53. The method according to claim 52, wherein the number of times or time of the uplink signal comprises:
one of number of times that the uplink signal should be transmitted, a maximum number of times of transmitting, or a minimum number of times of transmitting, or combinations thereof;
or
one of information on time period that permits the transmission of the uplink signal, a shortest time length, or a longest time length, or combinations thereof.

54. The method according to claim 52, wherein the feature information of the uplink signal comprises sequence information for generating the uplink signal.

55. The method according to claim 52, wherein the uplink signal is a preamble sequence signal for random access, and the characteristic information of the uplink signal comprises at least one piece of information in information entities PRACH-Config, RACH-ConfigCommon or RACH-ConfigDedicated;
or the uplink signal is a sounding reference signal, and the characteristic information of the uplink signal comprises at least one piece of information in an information entity SoundingRS-UL-Config;
or the uplink signal is a demodulation reference signal, and the characteristic information of the uplink signal comprises at least one piece of information in an information entity DM-RS-Config.

56. The method according to claim 48, wherein the method further comprises:
transmitting, by the first base station, a triggering message to the UE, to trigger the UE to transmit an uplink signal for handover;
receiving notification message(s) transmitted by one or more second base station(s), wherein the notification message is transmitted by the other base station according to detection of the uplink signal; and
determining, by the first base station, the target base station from the one or more other base station(s) according to the notification message(s), and performing handover of the UE.

57. The method according to claim 56, wherein the notification information comprises any piece of the following information or combinations thereof:
a UE identifier of the uplink signal detected by the second base station, number of detected uplink signals, signal strength or signal quality of the detected uplink signal, average signal strength or average signal quality of the detected uplink signal, weighted average signal strength or weighted average signal quality of the detected uplink signal, and a threshold value of the signal strength or signal quality used in judging that the uplink signal can be detected.

58. A method for configuring uplink signal, comprising:
negotiating, by a second base station and a first base station, configuration information of an uplink signal of UE; and
detecting, by the second base station according to the configuration information, the uplink signal transmitted by the UE.

59. The method according to claim 58, wherein the negotiating, by a second base station and a first base station, configuration information of the uplink signal of UE comprises:
receiving, by the second base station, a first message transmitted by the first base station, the first message containing configuration information of uplink signal of UE of the first base station; and
responding a second message to the first base station, the second message being an acknowledgement message or a message containing configuration information of uplink signal of UE of the second base station.

60. The method according to claim 59, wherein the method further comprises:
receiving, by the second base station, a third message transmitted by the first base station, the third message containing configuration information of uplink signal of one or more pieces of UE of the first base station.

61. The method according to claim 60, wherein the method further comprises:
transmitting, by the second base station, a fourth message to the first base station, the fourth message being used to reject configuration information of uplink signal of part or all of the UE in the third message.

62. The method according to any one of claims 58-61, wherein the configuration information of the uplink signal comprises any piece of the following information or combinations thereof:
transmission power of the uplink signal, carrier frequency information or cell information for transmitting the uplink signal, target carrier frequency information or cell information for handover of the UE, identification information of the UE, information on the user type to which the UE is applicable, information on the resource for transmitting the uplink signal, information on number of times or time of the uplink signal, and characteristic information of the uplink signal.

63. The method according to claim 58, wherein the method further comprises:
transmitting a notification message to the first base station according to detection of the uplink signal, so that the first base station performs handover of the UE according to the notification message.

64. The method according to claim 58, wherein the method further comprises:
activating, by the second base station, a frequency where the uplink signal is located or a cell receiver to which the frequency corresponds.

65. A method for configuring uplink signal, comprising:
receiving, by UE, configuration information of an uplink signal transmitted by a first base station; and
transmitting the uplink signal according to the configuration information, so that one or more second base station(s) detect the uplink signal.

66. The method according to claim 65, wherein the configuration information of the uplink signal comprises any piece of the following information or combinations thereof:
transmission power of the uplink signal, carrier frequency information or cell information for transmitting the uplink signal, target carrier frequency information or cell information for handover of the UE, identification information of the UE, information on the user type to which the UE is applicable, information on the resource for transmitting the uplink signal, information on number of times or time of the uplink signal, and characteristic information of the uplink signal.

67. The method according to claim 65, wherein the method further comprises:
receiving, by the UE, a triggering message transmitted by the first base station;
and the uplink signal is transmitted according to the triggering message and the configuration information.

68. A base station, comprising:
a negotiating unit, configured to negotiate configuration information of an uplink signal of UE with one or more second base station(s); and
an information transmitting unit, configured to transmit the configuration information of the uplink signal to the UE.

69. The base station according to claim 68, wherein the negotiating unit comprises:
a first transmitting unit, configured to transmit a first message to the second base station, the first message containing configuration information of uplink signal of UE of the base station; and
a first receiving unit, configured to receive a second message responded by the second base station, the second message being an acknowledgement message or a message containing configuration information of uplink signal of UE of the second base station.

70. The base station according to claim 69, wherein the base station further comprises:
a second transmitting unit, configured to transmit a third message to the second base station, the third message containing configuration information of uplink signal of one or more pieces of UE of the base station.

71. The base station according to claim 70, wherein the base station further comprises:
a second receiving unit, configured to receive a fourth message transmitted by the second base station, the fourth message being used to reject configuration information of uplink signal of part or all of the UE in the third message.

72. The base station according to claim 68, wherein the base station further comprises:
a message transmitting unit, configured to transmit a triggering message to the UE, to trigger the UE to transmit an uplink signal for handover;
a notification receiving unit, configured to receive notification message(s) transmitted by one or more second base station(s) according to detection of the uplink signal; and
a handover unit, configured to determine a target base station from the one or more second base station(s) according to the notification message(s), and perform handover of the UE.

73. A base station, comprising:
a negotiating unit, configured to negotiate configuration information ofan uplink signal of UE with a first base station; and
a detecting unit, configured to detect the uplink signal transmitted by the UE according to the configuration information.

74. The base station according to claim 73, wherein the negotiating unit comprises:
a third receiving unit, configured to receive a first message transmitted by the first base station, the first message containing configuration information of uplink signal of UE of the first base station; and
a third transmitting unit, configured to respond a second message to the first base station, the second message being an acknowledgement message or a message containing configuration information of uplink signal of UE of the base station.

75. The base station according to claim 73, wherein the base station further comprises:
a fourth receiving unit, configured to receive a third message transmitted by the first base station, the third message containing configuration information of uplink signal of one or more pieces of UE of the first base station.

76. The base station according to claim 75, wherein the base station further comprises:
a fourth transmitting unit, configured to transmit a fourth message to the first base station, the fourth message being used to reject configuration information of uplink signal of part or all of the UE in the third message.

77. The base station according to claim 73, wherein the base station further comprises:
a notification transmitting unit, configured to transmit notification message to the first base station according to detection of the uplink signal, so that the first base station performs handover of the UE according to the notification message.

78. The base station according to claim 73, wherein the base station further comprises:
an activating unit, configured to activate a frequency where the uplink signal is located or a cell receiver to which the frequency corresponds.

79. UE, comprising:
an information receiving unit, configured to receive configuration information of an uplink signal transmitted by a first base station; and
a signal transmitting unit, configured to transmit the uplink signal according to the configuration information, so that one or more second base station(s) detect the uplink signal.

80. The UE according to claim 79, wherein the UE further comprises:
a message receiving unit, configured to receive a triggering message transmitted by the first base station;
and the signal transmitting unit is further configured to transmit the uplink signal according to the triggering message and the configuration information.

81. A communication system, comprising the base station as claimed in any one of claims 32-37, the base station as claimed in any one of claims 38-45, and the UE as claimed in claim 47 or 48;
or comprising the base station as claimed in any one of claims 68-72, the base station as claimed in any one of claims 73-78, and the UE as claimed in claim 79 or 80.

82. A computer-readable program, wherein when the program is executed in a base station, the program enables a computer to carry out the handover method based on uplink signal as claimed in any one of claims 1-26, or the method for configuring uplink signal as claimed in any one of claims 48-64, in the base station.

83. A storage medium in which a computer-readable program is stored, wherein the computer-readable program enables a computer to carry out the handover method based on uplink signal as claimed in any one of claims 1-26, or the method for configuring uplink signal as claimed in any one of claims 48-64, in a base station.

84. A computer-readable program, wherein when the program is executed in UE, the program enables a computer to carry out the handover method based on uplink signal as claimed in any one of claims 27-31, or the method for configuring uplink signal as claimed in any one of claims 65-67, in the UE.

85. A storage medium in which a computer-readable program is stored, wherein the computer-readable program enables a computer to carry out the handover method based on uplink signal as claimed in any one of claims 27-31, or the method for configuring uplink signal as claimed in any one of claims 65-67, in UE.
